# EUROPEAN PATENT APPLICATION

(11) **EP 4 560 889 A1**
(43) Date of publication of application: **28.05.2025**
(21) Application number: 23854173.4
(22) Date of filing: 18.07.2023
(51) Int. Cl.: H02K 1/2795, H02K 1/2798, H02K 1/28, H02K 16/02, H02K 7/10, H02K 7/116, B60K 7/00

(54) **AXIAL MOTOR ROTOR, AXIAL MOTOR, POWER ASSEMBLY AND ELECTRIC DEVICE**

(30) Priority: 15.08.2022 CN 202210981683
(71) Applicant: Huawei Digital Power Technologies Co., Ltd., Shenzhen, Guangdong 518043 (CN)
(72) Inventor: ZHOU, Zhao, Shenzhen, Guangdong 518043 (CN); SHI, Chaojie, Shenzhen, Guangdong 518043 (CN); LIU, Chuanping, Shenzhen, Guangdong 518043 (CN)
(74) Representative: Isarpatent
(86) International application number: PCT/CN2023/107856
(87) International publication number: WO 2024/037268

(57) **Abstract**

This application provides an axial motor rotor, an axial motor, a powertrain, and an electric device. The axial motor rotor includes a rotor backplane, a plurality of magnetic pole units, and a fastening member. The rotor backplane is configured to be sleeved on a motor shaft of the axial motor. A backplane fastening hole is provided on the rotor backplane. The plurality of magnetic pole units are located on a side that is of the rotor backplane and that is in an axial direction of the rotor backplane, and are sequentially arranged in a circumferential direction of the rotor backplane. A magnetic pole fastening hole is provided on at least a part of the plurality of magnetic pole units. The fastening member penetrates through the magnetic pole fastening hole and the backplane fastening hole, to fasten the rotor backplane, the magnetic pole unit, and the fastening member. In the axial motor rotor provided in this application, the fastening member penetrates through the magnetic pole unit and the rotor backplane, to fasten the magnetic pole unit and the rotor backplane, thereby improving stability of connection between the magnetic pole unit and the rotor backplane.

## Description

### CROSS-REFERENCE TO RELATED APPLICATIONS

This application claims priority to Chinese Patent Application No. 202210981683.8, filed with the China National Intellectual Property Administration on August 15, 2022 and entitled "AXIAL MOTOR ROTOR, AXIAL MOTOR, POWERTRAIN AND ELECTRIC DEVICE", which is incorporated herein by reference in its entirety.

### TECHNICAL FIELD

This application relates to the field of motor technologies, and in particular, to an axial motor rotor, an axial motor, a powertrain, and an electric device.

### BACKGROUND

Compared with a conventional radial magnetic field permanent-magnet motor, an axial magnetic field permanent-magnet motor has significant advantages such as a compact structure, a high torque density, and high efficiency. In a conventional technology, during actual application of the axial magnetic field permanent-magnet motor, a rotation speed of the axial magnetic field permanent-magnet motor is not high, and a structure of the axial magnetic field permanent-magnet motor is mostly a surface-mounted structure. With an increase of a running frequency of a rotor, an eddy current loss of a conventional surface-mounted permanent-magnet rotor structure increases significantly, and consequently, performance of the motor decreases. In addition, a rotor reluctance torque component is small, and power at a high speed decreases quickly. In consideration of requirements for high structural strength and high power at the high speed, a preferred solution is to make a rotor core into an integrally formed ring structure and embed magnetic steel into the rotor core. However, the ring core structure is usually formed by winding silicon steel sheets, and an inner ring wall of the ring core structure is an Archimedes involute instead of a circle. As a result, it is difficult to implement effective cooperation between inner and outer ring walls of the rotor core and another motor rotor mechanical part through interference fit. Consequently, a connection between an inner ring wall of the magnetic steel and a motor shaft is unreliable, and structural strength is hard to improve. If the magnetic steel is made into a sector, a plurality of sectors are spliced into a ring structure, and consequently, reliability of an overall structure of the magnetic steel is reduced.

### SUMMARY

This application provides an axial motor rotor, an axial motor, a powertrain, and an electric device.

According to a first aspect, this application provides an axial motor rotor, including a rotor backplane, a plurality of magnetic pole units, and a fastening member. The rotor backplane is configured to be sleeved on a motor shaft of an axial motor. A backplane fastening hole is provided on the rotor backplane. The plurality of magnetic pole units are located on a side that is of the rotor backplane and that is in an axial direction of the rotor backplane, and are sequentially arranged in a circumferential direction of the rotor backplane. A magnetic pole fastening hole is provided on at least a part of the plurality of magnetic pole units. The fastening member penetrates through the magnetic pole fastening hole and the backplane fastening hole, to fasten the rotor backplane, the magnetic pole unit, and the fastening member.

In this solution, the magnetic pole unit is located on a side that is of the rotor backplane and that faces a stator, and the plurality of magnetic pole units are sequentially arranged around the axial direction of the rotor backplane to form a ring magnet structure. Each magnetic pole unit occupies only a part of the ring magnet structure. In comparison with an integrally formed ring magnet structure, processing of the magnet structure formed by encircling and splicing the plurality of magnetic pole units is simpler. The integrally formed ring magnet structure needs to be sleeved on the motor shaft. An inner wall of the integrally formed ring magnet structure needs to be processed into a circle to be better mounted with the motor shaft. However, it is usually difficult to process the inner wall into a circle, and process precision is hard to achieve. If the precision is insufficient, the inner wall of the magnet structure does not match the motor shaft, and reliability of a connection between the axial motor rotor and the motor shaft deteriorates. Consequently, overall reliability of the axial motor deteriorates, and the axial motor is easily damaged. However, in this application, a processing process of each magnetic pole unit is simpler. Two ends that are of each magnetic pole unit and that are in a radial direction are arcs. The arc is better processed than a circle, and processing precision is higher. Sizes of the magnetic pole units may be the same. After the magnetic pole units are processed, the plurality of magnetic pole units are encircled and spliced on the side that is of the rotor backplane and that faces the stator. It can be learned that, in this application, the ring magnet structure formed by sequentially arranging the plurality of magnetic pole units around the axial direction of the rotor backplane is better processed, and processing precision is higher. This helps improve reliability of the axial motor.

In this solution, the fastening member is used to penetrate through the magnetic pole unit and the rotor backplane to fasten the magnetic pole unit and the rotor backplane, and no additional fastening component is required to fasten the magnetic pole unit and the rotor backplane on a circumferential side of the magnetic pole unit. This can save space on the circumferential side of the magnetic pole unit, increase a quantity of magnets filled in a circumferential direction of the axial motor rotor, and improve magnetic performance of the axial motor rotor. In addition, no fastening component needs to be disposed between two adjacent magnetic pole units, so that a risk of magnetic leakage that is of a magnetic line of the magnetic pole unit and that is from the fastening component between the two adjacent magnetic pole units can be reduced.

In this application, in the axial motor rotor, the plurality of magnetic pole units are arranged around. Each magnetic pole unit is the part of the ring magnet structure. In comparison with the integrally formed ring magnet structure, the processing process of each magnetic pole unit is simpler. In addition, the fastening member penetrates into the magnetic pole unit and the rotor backplane, to fasten the magnetic pole unit and the rotor backplane, thereby improving stability of connection between the magnetic pole unit and the rotor backplane.

In a possible implementation, the magnetic pole fastening hole penetrates through two opposite surfaces that are of the magnetic pole unit and that are in the axial direction of the rotor backplane. The fastening member includes a fastening member body and a fastening cap that are connected to each other. The fastening cap is disposed at an end that is of the fastening member and that is away from the rotor backplane. A radial size of the fastening cap is greater than a radial size of the fastening member body. The magnetic pole fastening hole includes a magnetic pole fastening hole body and a magnetic pole fastening groove located at an end that is of the magnetic pole fastening hole body and that is away from the rotor backplane. The magnetic pole fastening groove communicates with the magnetic pole fastening hole body. A radial size of the magnetic pole fastening groove is greater than a radial size of the magnetic pole fastening hole body. The fastening member body penetrates through the magnetic pole fastening hole body and the backplane fastening hole. The fastening cap is located in the magnetic pole fastening groove and is in contact with a groove bottom of the magnetic pole fastening groove. In this implementation, the fastening cap is in contact with the groove bottom of the magnetic pole fastening groove and locks the magnetic pole unit and the rotor backplane, so that the magnetic pole unit can be prevented from being detached from the rotor backplane above the axial direction.

In a possible implementation, a part that is of the fastening member and that is located in the rotor backplane is connected to an inner wall of the backplane fastening hole through threads. In this implementation, a circumferential surface of an end that is of the fastening member body and that is close to the rotor backplane has a thread, and a thread is disposed in the backplane fastening hole. The end that is of the fastening member body and that is close to the rotor backplane and the backplane fastening hole are connected through threads and are locked and fastened through rotation of the fastening member.

In a possible implementation, the magnetic pole fastening hole penetrates through two opposite surfaces that are of the magnetic pole unit and that are in the axial direction of the rotor backplane, and the fastening member includes a fastening member body and a fastening nut. The magnetic pole fastening hole includes a magnetic pole fastening hole body and a magnetic pole fastening groove located at an end that is of the magnetic pole fastening hole body and that is away from the rotor backplane. The magnetic pole fastening groove communicates with the magnetic pole fastening hole body. A radial size of the magnetic pole fastening groove is greater than a radial size of the magnetic pole fastening hole body. The fastening member body penetrates through the magnetic pole fastening hole and the backplane fastening hole. An end that is of the fastening member body and that is away from the rotor backplane extends into the magnetic pole fastening groove. The fastening nut is located in the magnetic pole fastening groove. The fastening nut is sleeved at the end that is of the fastening member body and that is away from the rotor backplane, and is connected, through threads, to the end that is of the fastening member body and that is away from the rotor backplane. In this implementation, a thread is disposed on a circumferential surface of the end that is of the fastening member body and that is away from the rotor backplane, and the fastening nut is connected, through threads, to the end that is of the fastening member body and that is away from the rotor backplane, to fasten the magnetic pole unit and the rotor backplane.

In a possible implementation, the magnetic pole fastening hole penetrates through two opposite surfaces that are of the magnetic pole unit and that are in the axial direction of the rotor backplane. The fastening member includes a fastening member body and a fastening cap that are connected to each other. The fastening cap is disposed at an end that is of the fastening member body and that is away from the rotor backplane. A radial size of the fastening cap is greater than a radial size of the fastening member body. The fastening member body passes through the magnetic pole fastening hole and the backplane fastening hole. The fastening cap is located on a surface that is of the magnetic pole unit and that faces away from the rotor backplane, and is in contact with the surface that is of the magnetic pole unit and that faces away from the rotor backplane. In this implementation, the fastening cap is located on the surface that is of the magnetic pole unit and that faces away from the rotor backplane. The fastening cap is in contact with the surface of the magnetic pole unit, so that the magnetic pole unit is prevented from being detached from the rotor backplane above the axial direction.

In a possible implementation, the backplane fastening hole penetrates through two opposite surfaces that are of the rotor backplane and that are in the axial direction of the rotor backplane. An end that is of the fastening member and that is adjacent to the rotor backplane is located in the backplane fastening hole or extends through the backplane fastening hole to outside of the backplane fastening hole. When the end that is of the fastening member and that is adjacent to the rotor backplane extends through the backplane fastening hole to an outer side of the backplane fastening hole, a nut may be further used to fasten a part that is of the fastening member and that is located on the outer side of the backplane fastening hole, and a groove may be provided on a side that is of a cover and that faces the axial motor rotor, to accommodate the part that is of the fastening member and that penetrates out of the outer side of the backplane fastening hole, so that the cover is flat.

In a possible implementation, a magnetic pole positioning protruding portion is disposed on a surface that is of the magnetic pole unit and that faces the rotor backplane. A backplane positioning groove is provided on a surface that is of the rotor backplane and that faces the magnetic pole unit. The magnetic pole positioning protruding portion is located in the backplane positioning groove. The magnetic pole positioning protruding portion cooperates with the backplane positioning groove, to implement positioning of the magnetic pole unit and the rotor backplane, thereby improving installation efficiency and accuracy. One magnetic pole positioning protruding portion and one backplane positioning groove are referred to as a pair of positioning components. In an implementation, there may be one pair or more than two pairs of positioning components. In an implementation, when there are two pairs of positioning components, the two pairs of positioning components may be arranged in the radial direction, or arranged in the circumferential direction of the rotor backplane. In another implementation, when there are two or more pairs of positioning components, an arrangement manner of the positioning components may be set according to a requirement.

In a possible implementation, the magnetic pole positioning protruding portion is disposed around a circumferential side of the magnetic pole fastening hole. A magnetic pole positioning through hole is provided in the magnetic pole positioning protruding portion. The magnetic pole positioning through hole communicates with the magnetic pole fastening hole. The backplane positioning groove is provided around a circumferential side of the backplane fastening hole. The fastening member sequentially passes through the magnetic pole fastening hole, the magnetic pole positioning through hole, and the backplane fastening hole. In this implementation, the backplane positioning groove communicates with the backplane fastening hole. In some implementations, a radial size of an end that is of the backplane fastening hole and that is close to the magnetic pole unit may alternatively be set to be relatively large, to accommodate the magnetic pole positioning protruding portion. In this implementation, the magnetic pole positioning protruding portion is disposed around the circumferential side of the magnetic pole fastening hole, so that an occupied position on the magnetic pole unit can be reduced, and it can be avoided that magnetic performance of the magnetic pole unit is affected because positioning components are disposed at different positions of the magnetic pole unit. The backplane positioning groove is provided around the circumferential side of the backplane fastening hole, so that it can be avoided that grooves are provided at different positions of the rotor backplane, and structural strength of the rotor backplane is ensured.

In a possible implementation, a magnetic pole positioning groove is provided on a surface that is of the magnetic pole unit and that faces the rotor backplane. A backplane positioning protruding portion is disposed on a surface that is of the rotor backplane and that faces the magnetic pole unit. The backplane positioning protruding portion is located in the magnetic pole positioning groove. In this implementation, the magnetic pole positioning groove is provided on the magnetic pole unit, and the backplane positioning protruding portion is disposed on the rotor backplane. The backplane positioning protruding portion cooperates with the magnetic pole positioning groove, to implement positioning of the magnetic pole unit and the rotor backplane, thereby improving installation efficiency and accuracy.

In a possible implementation, the magnetic pole positioning groove is provided around the magnetic pole fastening hole, and the backplane positioning protruding portion is disposed around the backplane fastening hole.

In a possible implementation, the magnetic pole positioning protruding portion and the magnetic pole fastening hole are provided at intervals, and the backplane positioning groove and the backplane fastening hole are provided at intervals. In this implementation, processing flexibility of the magnetic pole positioning protruding portion and the backplane positioning groove can be improved, thereby facilitating processing.

In a possible implementation, the magnetic pole positioning groove and the magnetic pole fastening hole are provided at intervals, and the backplane positioning protruding portion and the backplane fastening hole are provided at intervals. In this implementation, processing flexibility of the magnetic pole positioning groove and the backplane positioning protruding portion can be improved, thereby facilitating processing.

In a possible implementation, the magnetic pole unit includes a first soft magnet and a first permanent magnet. At least a part of the first soft magnet and at least a part of the first permanent magnet are stacked in the axial direction of the rotor backplane. The magnetic pole fastening hole penetrates through the first soft magnet and the first permanent magnet. The first soft magnet facilitates circulation of a magnetic line, and provides a smooth circulation path for the magnetic line. When the first soft magnet is located on a side that is of the first permanent magnet and that faces away from an air gap, a magnetic line of the first permanent magnet flowing outward may flow into a first permanent magnet in an adjacent magnetic pole unit through the first soft magnet. In comparison with that a magnetic line of the first permanent magnet flows into a first permanent magnet in a connected magnetic pole unit through air, the first soft magnet is more conducive to circulation of the magnetic line than the air, and can reduce a magnetic flux loss.

In a possible implementation, a circumferential size of the magnetic pole unit gradually increases from an end close to a rotor inner support portion to an end away from the rotor inner support portion. Because the rotor inner support portion is located on an inner side, a rotor outer support portion is located on an outer side, and a circumferential size of the rotor outer support portion is greater than a circumferential size of the rotor inner support portion, space between the rotor outer support portion and the rotor inner support portion gradually increases from an area of a region close to the rotor inner support portion to an area of a region close to the rotor outer support portion. In this implementation, the magnetic pole unit is disposed as above. In this way, the magnetic pole unit is in a sector shape, to adapt to the space between the rotor outer support portion and the rotor inner support portion, so that a larger area of the magnetic pole unit is filled between the rotor outer support portion and the rotor inner support portion. This fully utilizes internal space of the rotor backplane, increases an area of the magnetic pole unit, increases a magnetic density, and increases an output torque.

In a possible implementation, the first permanent magnet is contiguous in the radial direction of the rotor backplane. If the first permanent magnet is discontiguous in the radial direction of the rotor backplane, the permanent magnet includes three sub-magnetic pole units distributed in the radial direction. The permanent magnet usually has high structural strength and is hard to process. For example, the permanent magnet is magnetic steel, and it is difficult to process and align surfaces of two sides that are of three permanent magnets and that are in the circumferential direction, resulting in high processing costs. If the surfaces of the two sides that are of the three permanent magnets and that are in the circumferential direction are not aligned, space in the backplane groove is wasted. Consequently, a quantity of filled permanent magnets is reduced, and performance of the axial motor is reduced. In addition, the three sub-magnetic pole units need three sets of stamping dies, and a quantity of magnetic steel abrasive tools is relatively large. In addition, to ensure coaxiality of inner and outer arc walls of the three sub-magnetic pole units, high processing precision is required, resulting in a complex processing process. In this implementation, the first permanent magnet is contiguous in the radial direction of the rotor backplane. The first permanent magnet is of a contiguous integral structure in the radial direction, so that surfaces of two sides that are of the first permanent magnet and that are in the circumferential direction are aligned. This is simple to process, and also helps increase a volume of the magnetic pole unit and increase a magnetic density.

In a possible implementation, a projection of the first permanent magnet on the first soft magnet in the axial direction of the rotor backplane is located in the first soft magnet. In this implementation, a circumferential size of the first soft magnet is greater than a circumferential size of the first permanent magnet. This is conducive to converging magnetic flux lines and conducive to magnetic conduction. In this implementation, an area of a largest surface of the first permanent magnet is less than an area of a largest surface of the first soft magnet, so that most or all of magnetic lines flowing out of the first permanent magnet can enter the first soft magnet, be converged by using the first soft magnet, and flow into the adjacent magnetic pole unit through the first soft magnet. Both the largest surface of the first soft magnet and the largest surface of the first permanent magnet vertically intersect the axial direction of the rotor backplane.

In a possible implementation, the magnetic pole unit further includes a second soft magnet. The first permanent magnet includes a first body portion, a first portion, and a second portion. The first soft magnet, the first body portion, and the second soft magnet are stacked in the axial direction of the rotor backplane. The first portion and the second portion are arranged on two sides that are of the first body portion and the second soft magnet and that are in the circumferential direction of the rotor backplane. In this implementation, the first soft magnet and the second soft magnet are respectively disposed on two sides that are of the first permanent magnet and that are in the axial direction, so that magnetic lines of the two sides that are of the first permanent magnet and that are in the axial direction are converged by soft magnets, thereby increasing an air gap magnetic density. In this implementation, the first portion and the second portion are disposed. This is conducive to converging magnetic lines. When the first portion and the second portion protrude toward a side of the air gap, the magnetic lines are converged into a winding coil on the stator, so that an air gap magnetic density waveform is close to a sine wave, thereby increasing output torque and reducing torque fluctuation.

In a possible implementation, the first permanent magnet is magnetic steel, and a circumferential size of the first body portion gradually increases from an end close to the rotor inner support portion to an end away from the rotor inner support portion. In this way, the first body portion is in a sector shape. The first body portion is also magnetic steel, and the magnetic steel is in a sector shape, so that the space in the backplane groove can be fully used, thereby avoiding insufficient motor performance caused by a relatively small size of a magnetic pole unit occupied by the magnetic steel at an outer diameter. The magnetic steel is in the sector shape. This can effectively improve the performance of the axial motor. In addition, the magnetic steel is built in the magnetic pole unit, so that a reluctance torque component of the axial motor is increased. In this way, the axial motor can still maintain relatively large power under a high-speed working condition.

In a possible implementation, the magnetic pole unit further includes a second permanent magnet. A second soft magnetic groove is provided on a surface that is of the second soft magnet and that faces away from the first body portion. The second permanent magnet is located in the second soft magnetic groove. In this implementation, the second permanent magnet and the first permanent magnet are jointly configured to generate magnetic lines L, increase a magnetic flux, increase output torque, and improve motor performance.

In a possible implementation, the magnetic pole unit further includes a third soft magnet. The third soft magnet is located on a side that is of the second permanent magnet and that is away from the rotor backplane. Two sides that are of the third soft magnet and that are in the circumferential direction are at most partially in contact with the second soft magnet. In this implementation, the third soft magnet helps to guide the magnetic lines generated by the second permanent magnet and the first permanent magnet into the air gap. The two sides that are the third soft magnet and that are in the circumferential direction are at most partially in contact with the second soft magnet, so that a magnetic internal gap may be enclosed between the second soft magnet, the second permanent magnet, and the third soft magnet, and the magnetic line generated by the second permanent magnet does not enter the second soft magnet through the two sides that are the third soft magnet and that are in the circumferential direction. In this implementation, a part of the two sides that are the third soft magnet and that are in the axial direction is in contact with an inner wall of the second soft magnet, to improve structural strength of the third soft magnet and the second soft magnet. When the two sides that are the third soft magnet and that are in the circumferential direction are at most partially in contact with the second soft magnet, it is avoided that the magnetic line entering the air gap is reduced due to magnetic leakage.

In a possible implementation, the axial motor rotor further includes a rotor inner support portion and a rotor outer support portion that are coaxially disposed. The rotor inner support portion is located on an inner circumferential side of the rotor backplane and protrudes toward a side of the rotor backplane relative to the rotor backplane. The rotor outer support portion is located on an outer circumferential side of the rotor backplane and protrudes toward the side relative to the rotor backplane. Two ends that are of each magnetic pole unit and that are in the radial direction of the rotor backplane are respectively connected to the rotor inner support portion and the rotor outer support portion. In this implementation, the two ends that are of the magnetic pole unit and that are in the radial direction the rotor backplane are respectively connected to the rotor inner support portion and the rotor outer support portion, to improve the stability of connection between the magnetic pole unit and the rotor backplane, and prevent the magnetic pole unit from moving in the radial direction relative to the rotor backplane.

In a possible implementation, the rotor backplane, the rotor inner support portion, and the rotor outer support portion enclose a backplane groove. The plurality of magnetic pole units are located in the backplane groove. An adhesive is filled between the plurality of magnetic pole units and an inner wall of the backplane groove. In this implementation, the backplane groove is filled with the adhesive, to enhance reliability of connections between the magnetic pole unit and the rotor backplane, the rotor inner support portion, and the rotor outer support portion.

In a possible implementation, the rotor backplane, the rotor inner support portion, and the rotor outer support portion form a rotor fastening sleeve. The rotor fastening sleeve is sleeved on the motor shaft. The rotor fastening sleeve is of an integrated structure. In an implementation, the rotor backplane, the rotor inner support portion, and the rotor outer support portion form the rotor fastening sleeve of the integrated structure, to improve structural strength.

In a possible implementation, the rotor backplane, the rotor inner support portion, and the rotor outer support portion are made of a non-magnetic conductive material, to avoid magnetic leakage and increase a density of magnetic lines that are generated by the magnetic pole unit and that enter the air gap.

In a possible implementation, the axial motor rotor further includes a reinforcing ring. The reinforcing ring is sleeved on an outer side of the rotor outer support portion. A high-strength reinforcing ring with interference is wound or pressed into the outer side of the rotor outer support portion, to improve structural strength. In an implementation, the reinforcing ring is a carbon fiber ring or a glass fiber ring.

In a possible implementation, there is an inter-magnetic gap between two adjacent magnetic pole units. The axial motor rotor further includes a filling magnet, and the filling magnet is filled in the inter-magnetic gap. In addition, two ends that are of the filling magnet and that are in the radial direction of the rotor backplane are respectively disposed at intervals with the rotor inner support portion and the rotor outer support portion. Disposing at intervals includes keeping a physical spacing, so that there is a specific distance between the rotor inner support portion and the filling magnet, and there is a specific distance between the rotor outer support portion and the filling magnet. Alternatively, insulation materials are disposed at two ends of the filling magnet, to avoid that the filling magnet is electrically connected to the rotor inner support portion and the rotor outer support portion, thereby avoiding an increase in an eddy current caused by conductivity between the filling magnet and the rotor inner support portion and the rotor outer support portion, and reducing a magnetic line loss of the magnetic pole unit. In an implementation, the filling magnet is a soft magnetic composite magnet, and the soft magnetic composite magnet is made of a soft magnetic composite material. The soft magnetic composite material is a soft magnetic material formed by evenly dispersing magnetic particles in a non-magnetic object, and provides a path for magnetic line conduction for the two adjacent magnetic pole units.

According to a second aspect, this application provides an axial motor. The axial motor includes a motor shaft, a stator, and the axial motor rotor according to any one of the foregoing. The stator is mounted on the motor shaft and is rotatably connected to the motor shaft. The axial motor rotor is mounted on the motor shaft and is fastened to the motor shaft. A magnetic pole unit is located on a side that is of a rotor backplane and that faces the stator.

According to a third aspect, this application provides a powertrain, including a gearbox and the axial motor described above. The axial motor is in transmission connection to a power input shaft of the gearbox, and is configured to output power to the power input shaft.

According to a fourth aspect, this application provides an electric device. The electric device includes a device body and the axial motor described above, and the axial motor is mounted on the device body.

Alternatively, the electric device includes a device body and the powertrain described above, and the powertrain is mounted on the device body.

### BRIEF DESCRIPTION OF DRAWINGS

To describe technical solutions in embodiments of this application more clearly, the following describes the accompanying drawings used in embodiments of this application.
FIG. 1a is an overall diagram of an axial motor according to an embodiment of this application;
FIG. 1b is an exploded view of the axial motor in FIG. 1a according to this application;
FIG. 2 is a cross-sectional view of an axial motor according to an embodiment of this application;
FIG. 3 is a diagram of a structure of a powertrain according to an embodiment of this application;
FIG. 4 is a diagram of a structure of an electric device according to an embodiment of this application;
FIG. 5 is a diagram of a structure of an axial motor rotor according to an embodiment of this application;
FIG. 6 is a diagram of a structure of a magnet structure in an axial motor rotor according to an embodiment of this application;
FIG. 7 is a diagram of a structure of a rotor fastening sleeve in an axial motor rotor according to an embodiment of this application;
FIG. 8 is a cross-sectional view of a structure of an axial motor rotor according to an embodiment of this application;
FIG. 9 is a partial enlarged diagram of a part M in FIG. 8 according to this application;
FIG. 10 is a diagram of structures of a magnetic pole unit, a rotor backplane, and a fastening member according to an embodiment of this application;
FIG. 11 is a diagram of structures of a magnetic pole unit, a rotor backplane, and a fastening member according to an embodiment of this application;
FIG. 12 is a diagram of structures of a magnetic pole unit, a rotor backplane, and a fastening member according to an embodiment of this application;
FIG. 13 is a diagram of structures of a magnetic pole unit, a rotor backplane, and a fastening member according to an embodiment of this application;
FIG. 14 is a diagram of structures of a magnetic pole unit, a rotor backplane, and a fastening member according to an embodiment of this application;
FIG. 15 is a diagram of a structure of a rotor fastening sleeve according to an embodiment of this application;
FIG. 16 is a partial diagram of an axial motor rotor according to an embodiment of this application;
FIG. 17 is a diagram (1) of a structure of a magnetic pole unit according to an embodiment of this application;
FIG. 18 is a diagram (2) of a structure of a magnetic pole unit according to an embodiment of this application;
FIG. 19 is an exploded view of the magnetic pole unit in FIG. 17 according to this application;
FIG. 20 is a diagram of a magnetic circuit of an axial motor rotor according to an embodiment of this application;
FIG. 21 is a diagram of a structure of a magnetic pole unit according to an embodiment of this application;
FIG. 22 is a diagram of structures of a first permanent magnet and a second permanent magnet in a magnetic pole unit according to an embodiment of this application;
FIG. 23 is a diagram of a structure of a magnetic pole unit in an axial motor rotor according to an embodiment of this application;
FIG. 24 is a diagram of a structure of a magnetic pole unit in an axial motor rotor according to an embodiment of this application;
FIG. 25 is a diagram of a structure of a magnetic pole unit in an axial motor rotor according to an embodiment of this application; and
FIG. 26 is a diagram of a structure of a magnetic pole unit in an axial motor rotor according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

Terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, orientation terms such as "top" and "bottom" are defined relative to orientations of structures schematically placed in the accompanying drawings. It should be understood that these orientation terms are relative concepts and are used for relative descriptions and clarification, and may correspondingly change based on a change in an orientation in which the structure is placed.

For ease of understanding, the following first explains and describes English abbreviations and related technical terms used in embodiments of this application.

Soft magnetic composite material: SMC has a full name of soft magnetic composite. The soft magnetic composite material is a soft magnetic material formed by evenly dispersing magnetic particles in a non-magnetic object.

This application provides an axial motor rotor. The axial motor rotor includes a rotor backplane, a plurality of magnetic pole units, and a fastening member. The rotor backplane is configured to be sleeved on a motor shaft of an axial motor. A backplane fastening hole is provided on the rotor backplane. The plurality of magnetic pole units are located on a side that is of the rotor backplane and that is in an axial direction of the rotor backplane, and are sequentially arranged in a circumferential direction of the rotor backplane. A magnetic pole fastening hole is provided on at least a part of the plurality of magnetic pole units. The fastening member penetrates through the magnetic pole fastening hole and the backplane fastening hole, to fasten the rotor backplane, the magnetic pole unit, and the fastening member. In the axial motor rotor provided in this application, the fastening member penetrates through the magnetic pole unit and the rotor backplane, to fasten the magnetic pole unit and the rotor backplane, thereby improving stability of connection between the magnetic pole unit and the rotor backplane.

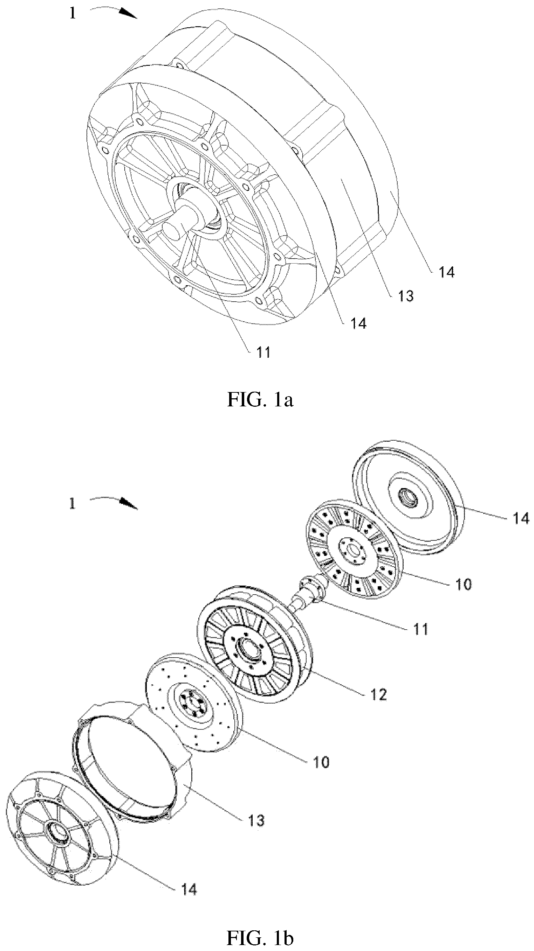

Refer to FIG. 1a and FIG. 1b. FIG. 1a is an overall diagram of an axial motor 1 according to an embodiment of this application, and FIG. 1b is an exploded view of the axial motor 1 in FIG. 1a according to this application. The axial motor 1 includes an axial motor rotor 10, a motor shaft 11, and a stator 12. The stator 12 is mounted on the motor shaft 11 and is rotatably connected to the motor shaft 11. The axial motor rotor 10 is mounted on the motor shaft 11 and is fastened to the motor shaft 11. When an alternating current is supplied into an armature winding of the stator 12, a generated alternating flux interacts with a permanent-magnet flux generated by the axial motor rotor 10, so that the axial motor rotor 10 rotates relative to the stator 12. The axial motor rotor 10 is fastened to the motor shaft 11, so that the motor shaft 11 rotates with the axial motor rotor 10. The stator 12 is rotatably connected to the motor shaft 11, so that the motor shaft 11 can rotate relative to the stator 12. When the axial motor 1 works, the stator 12 does not move, and the axial motor rotor 10 and the motor shaft 11 synchronously rotate. An output end of the motor shaft 11 is configured to drive an external component to rotate.

In a possible implementation, the axial motor 1 further includes a housing 13 and an end cover 14 (as shown in FIG. 1b). The housing 13 is located on an outer side of the stator 12, and the end cover 14 is located on a side that is of the axial motor rotor 10 and that is away from the stator 12. The end cover 14 is fastened to the housing 13, and the axial motor rotor 10 is located between the end cover 14 and the stator 12.

In a possible implementation, the axial motor 1 includes two axial motor rotors 10 (as shown in FIG. 1b). The two axial motor rotors 10 are both mounted on the motor shaft 11 and are fastened to the motor shaft 11, and the two axial motor rotors 10 are located on two sides that are of the stator 12 and that are in an axial direction of the motor shaft 11. The two axial motor rotors 10 improve working efficiency of the axial motor 1. In this implementation, the axial motor 1 includes two end covers 14. As shown in FIG. 1b, the two end covers 14 and the housing 13 enclose an accommodating space, and the two axial motor rotors 10 and the stator 12 are located in the accommodating space.

In a possible implementation, a bearing (not shown in the figure) is disposed on the motor shaft 11, the stator 12 is sleeved on the motor shaft 11 by using the bearing, and the stator 12 is rotatably connected to the motor shaft 11 through the bearing. In an implementation, a first fastening plate (not shown in the figure) and a second fastening plate (not shown in the figure) are disposed on the motor shaft 11. The first fastening plate is configured to fasten one of the axial motor rotors 10, and the second fastening plate 17 is configured to fasten the other axial motor rotor 10. For example, the first fastening plate and the axial motor rotor 10 may be connected through a screw, and the second fastening plate 17 and the axial motor rotor 10 may be connected through a screw.

In a possible implementation, the motor shaft 11 includes a first motor half-shaft and a second motor half-shaft. The first motor half-shaft and the second motor half-shaft are fastened to each other. The first fastening plate is disposed on the first motor half-shaft, and the bearing and the second fastening plate are disposed on the second motor half-shaft. In some embodiments, the motor shaft 11 may alternatively be integrally formed, and the first fastening plate, the bearing, and the second fastening plate are disposed on the motor shaft 11.

In a possible implementation, the axial motor 1 includes one axial motor rotor 10 and one stator 12.

In a possible implementation, the axial motor 1 includes one axial motor rotor 10 and two stators 12. The two stators 12 are distributed on two sides of the axial motor rotor 10 in an axial direction of the motor shaft 11.

In a possible implementation, the axial motor 1 includes a plurality of axial motor rotors 10 and a plurality of stators 12. The axial motor rotors 10 and the stators 12 are alternately arranged in an axial direction of the motor shaft 11. For example, the axial motor 1 includes three axial motor rotors 10 and two stators 12.

In a possible implementation, the stator 12 may be a wound winding stator or a distributed winding stator. The wound winding stator includes a plurality of stator cores distributed around the motor shaft 11. A winding is wound around each stator core, to form a wound winding. The stator 12 shown in FIG. 1b is a wound winding stator. The distributed winding stator includes a stator core disposed around the motor shaft 11 as a whole. The stator core is of an integral structure. Then, a winding groove is stamped on the stator core, so that a winding is wound in the winding groove, to form a distributed winding.

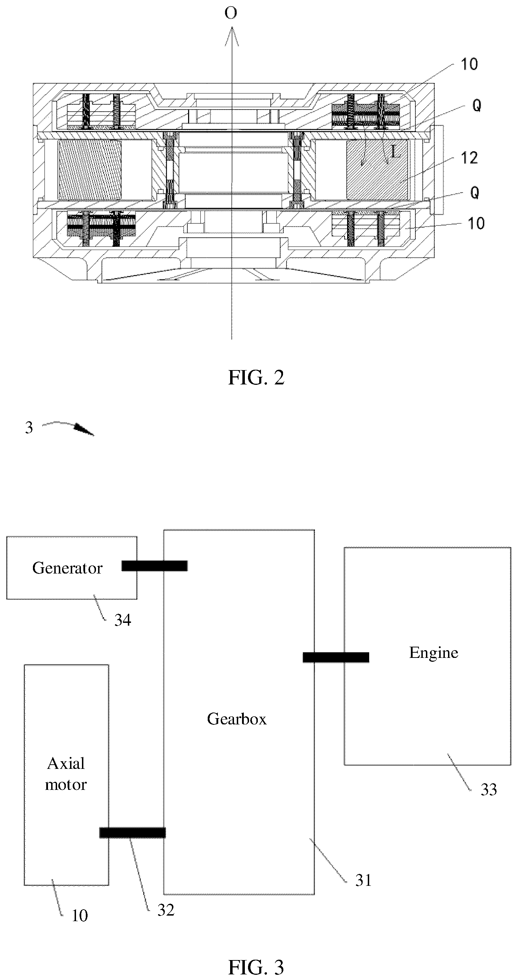

Refer to FIG. 2. FIG. 2 is a cross-sectional view of the axial motor 1 according to an embodiment of this application. In this embodiment, there is an air gap Q between the stator 12 and the axial motor rotor 10, and a magnetic line L generated in the axial motor rotor 10 enters the stator 12 through the air gap Q. In this embodiment, two air gaps Q are formed between the two axial motor rotors 10 and the stator 12.

The axial motor 1 uses the axial motor rotor 10 in this application, and a plurality of magnetic pole units are arranged around to form a magnet structure of the axial motor rotor. Each magnetic pole unit is a part of a ring magnet structure. In comparison with an integrally formed ring magnet structure, a processing process of each magnetic pole unit is simpler. In addition, a fastening member penetrates through the magnetic pole unit and a rotor backplane, to fasten the magnetic pole unit and the rotor backplane, thereby improving stability of connection between the magnetic pole unit and the rotor backplane.

Refer to FIG. 3. FIG. 3 is a diagram of a structure of a powertrain 3 according to an embodiment of this application. The powertrain 3 includes a gearbox 31 and the axial motor 10 described above. The axial motor 10 is in transmission connection to a power input shaft 32 of the gearbox 31, and is configured to output power to the power input shaft 32. In this embodiment, the gearbox 31 and the axial motor 10 in the powertrain 3 may be separated or integrated. The motor shaft 11 of the axial motor 10 is fastened to the power input shaft 32 of the gearbox 31, so that the power of the axial motor 10 is transmitted to the power input shaft 32.

In a possible implementation, a wheel drive shaft (not shown in the figure) is disposed in the gearbox 31, and the wheel drive shaft provides power for a wheel after receiving the power output by the axial motor 10. In this implementation, a gear component is disposed in the gearbox 31, to implement power transfer between the axial motor 10 and the wheel drive shaft.

In a possible implementation, the powertrain 3 further includes an engine 33 and a generator 34. The engine 33 is in transmission connection to another power input shaft in the gearbox 31, and is configured to output power to the another power input shaft. The generator 34 is in transmission connection to the engine 33 through the gear component in the gearbox 31. The power output by the engine 33 is transmitted to the generator 34 through the gearbox 31. The generator 34 generates power and is configured to store electric energy in a power battery, to charge the power battery. It should be noted that the powertrain 3 provided in FIG. 3 includes the engine 33 and the generator 34, and the powertrain 3 is a hybrid power system. In some implementations, the engine 33 and the generator 34 may not be disposed, and only the axial motor 10 and the gearbox 31 are included. In this case, the powertrain 3 is a pure electric power system.

In a possible implementation, the powertrain 3 further includes at least one of the following: an MCU, an OBC, a DC-DC, a PDU, and a BCU. The MCU is a motor control unit. The OBC is an on-board charger. The DC-DC is a direct current converter. The PDU is a power distribution unit. The BCU is a battery control unit. The powertrain 3 may integrate at least one of the foregoing components according to a requirement.

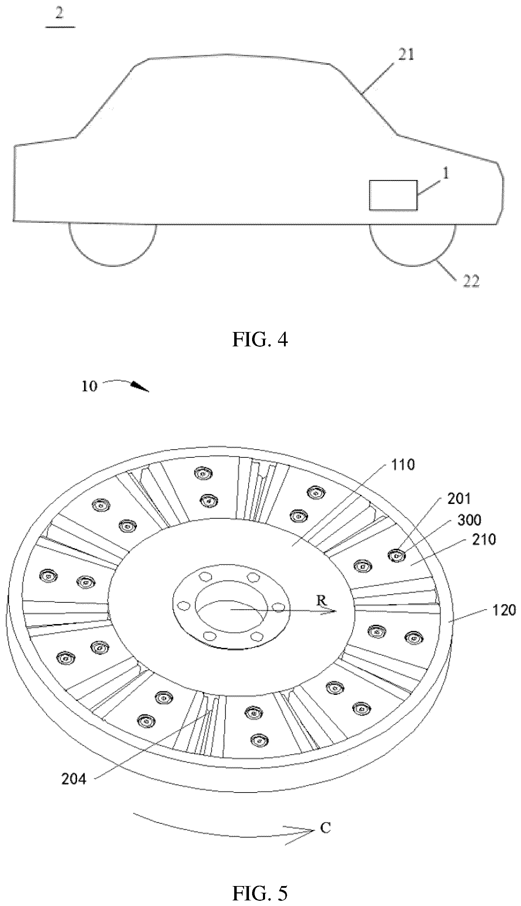

Refer to FIG. 4. FIG. 4 is a diagram of a structure of an electric device 2 according to an embodiment of this application. The electric device 2 includes a device body 21 and the axial motor 1 described above. The axial motor 1 is mounted on the device body 21.

The electric device 2 includes a vehicle, a robot, or a traveling device in another form. The vehicle includes an electric car/electric vehicle (Electric Vehicle, EV for short), a pure electric vehicle (Pure Electric Vehicle/Battery Electric Vehicle, PEV/BEV for short), a hybrid electric vehicle (Hybrid Electric Vehicle, HEV for short), a range extended electric vehicle (Range Extended Electric Vehicle, REEV for short), a plug-in hybrid electric vehicle (Plug-in Hybrid Electric Vehicle, PHEV for short), a new energy vehicle (New Energy Vehicle), and the like. In some implementations, the vehicle includes a passenger vehicle and various special-purpose vehicles with particular functions, such as an engineering rescue truck, a water sprinkler truck, a sewage suction truck, a concrete mixer truck, a crane, and a medical vehicle.

For example, as shown in FIG. 4, the electric device 2 is a vehicle, and the electric device 2 further includes a wheel 22. The wheel 22 is mounted on the device body 21. The axial motor 1 is in transmission connection to the wheel 22, and is configured to drive the wheel 22 to run, to drive the vehicle to travel.

The following describes in detail the axial motor rotor in this application.

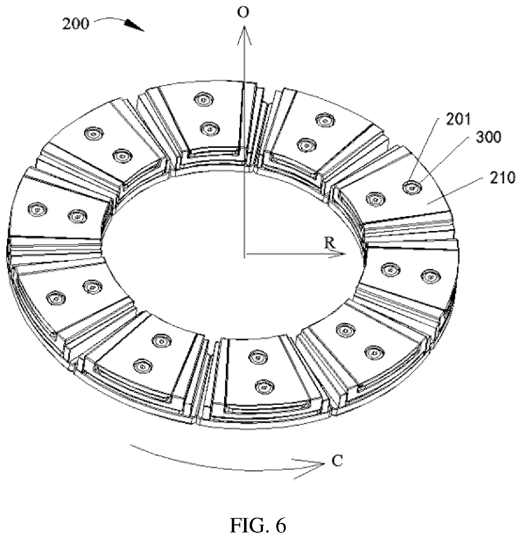

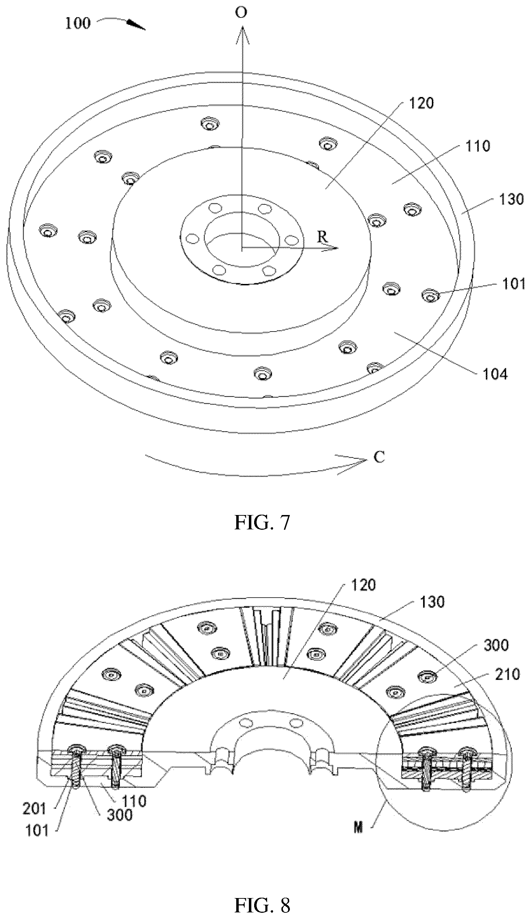

Refer to FIG. 5, FIG. 6, FIG. 7, and FIG. 8. FIG. 5 is a diagram of a structure of the axial motor rotor 10 according to an embodiment of this application. FIG. 6 is a diagram of a structure of a magnet structure 200 in the axial motor rotor 10 according to this application. FIG. 7 is a diagram of a structure of a rotor fastening sleeve 100 in the axial motor rotor 10 according to this application. FIG. 8 is a cross-sectional view of a structure of the axial motor rotor 10 according to an embodiment of this application. In this embodiment, the axial motor rotor 10 includes a rotor backplane 110 (as shown in FIG. 7), a plurality of magnetic pole units 210, and a fastening member 300. The rotor backplane 110 is configured to be sleeved on the motor shaft 11 of the axial motor 1. A backplane fastening hole 101 (as shown in FIG. 7) is provided on the rotor backplane 110. The plurality of magnetic pole units 210 are located on a side that is of the rotor backplane 110 and that is in an axial direction O of the rotor backplane 110, and are sequentially arranged in a circumferential direction C of the rotor backplane 110. A magnetic pole fastening hole 201 is provided on at least a part of the plurality of magnetic pole units 210 (as shown in FIG. 6). The fastening member 300 penetrates through the magnetic pole fastening hole 201 and the backplane fastening hole 101, to fasten the rotor backplane 110, the magnetic pole unit 210, and the fastening member 300.

In this embodiment, an axis of the rotor backplane 110 coincides with an axis of the motor shaft 11, the axial direction O of the rotor backplane 110 coincides with the axial direction of the motor shaft 11, an extension direction of the axis of the rotor backplane 110 is the axial direction O of the rotor backplane 110, and a radial direction R of the rotor backplane 110 is the same as a radial direction of the motor shaft 11. In this embodiment, the rotor backplane 110 is of a ring structure. The circumferential direction C of the rotor backplane 110 is a circumferential direction surrounding the axial direction O of the rotor backplane 110.

In this embodiment, the magnetic pole unit 210 is located on a side that is of the rotor backplane 110 and that faces the stator 12, and the plurality of magnetic pole units 210 are sequentially arranged around the axial direction O of the rotor backplane 110 to form the ring magnet structure 200 (as shown in FIG. 6). Each magnetic pole unit 210 occupies only a part of the ring magnet structure 200. In comparison with an integrally formed ring magnet structure, processing of the magnet structure 200 formed by encircling and splicing the plurality of magnetic pole units 210 is simpler. An integrally formed ring magnet structure 200 needs to be sleeved on the motor shaft 11. An inner wall of the integrally formed ring magnet structure 200 needs to be processed into a circle to be better mounted with the motor shaft 11. However, it is usually difficult to process the inner wall into a circle, and process precision is hard to achieve. If the precision is insufficient, the inner wall of the magnet structure 200 does not match the motor shaft 11, and reliability of a connection between the axial motor rotor 10 and the motor shaft 11 deteriorates. Consequently, overall reliability of the axial motor 1 deteriorates, and the axial motor 1 is easily damaged. However, in this application, a processing process of each magnetic pole unit 210 is simpler. Two ends that are of each magnetic pole unit 210 and that are in the radial direction R are arcs. The arc is better processed than a circle, and processing precision is higher. Sizes of the magnetic pole units 210 may be the same. After the magnetic pole units 210 are processed, the plurality of magnetic pole units 210 are encircled and spliced on the side that is of the rotor backplane 110 and that faces the stator 12. It can be learned that, in this application, the ring magnet structure 200 formed by sequentially arranging the plurality of magnetic pole units 210 around the axial direction O of the rotor backplane 110 is better processed, and processing precision is higher. This helps improve reliability of the axial motor 10.

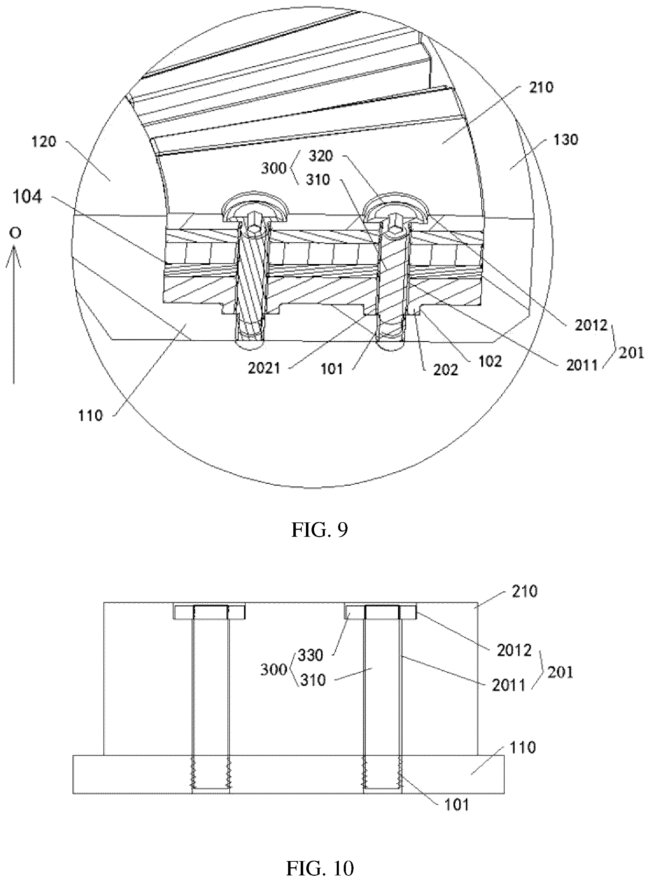

Refer to FIG. 9. FIG. 9 is a partial enlarged diagram of a part M in FIG. 8 according to this application. In this embodiment, the backplane fastening hole 101 in the rotor backplane 110 extends in the axial direction O, the magnetic pole fastening hole 201 in the magnetic pole unit 210 extends in the axial direction O, and an extension direction of the fastening member 300 is the same as the axial direction O, so that the fastening member 300 passes through the magnetic pole fastening hole 201 and the backplane fastening hole 101 in a direction perpendicular to a surface of the magnetic pole unit 210 or a surface of the rotor backplane 110. In this way, stability of connection between the fastening member 300 and the rotor backplane 110 and between the fastening member 300 and the magnetic pole unit 210 can be improved, to prevent the magnetic pole unit 210 from falling off from the rotor backplane 110.

In some implementations, an extension direction of the backplane fastening hole 101 intersects with the axial direction O, an extension direction of the magnetic pole fastening hole 201 intersects with the axial direction O, and the extension direction of the backplane fastening hole 101 is the same as the extension direction of the magnetic pole fastening hole 201. That is, the magnetic pole fastening hole 201 and the backplane fastening hole 101 extend in an oblique direction, and the fastening member 300 is slanted through the rotor backplane 110 and the magnetic pole unit 210. Similarly, the rotor backplane 110 and the magnetic pole unit 210 may also be connected and fastened, to prevent the magnetic pole unit 210 from falling off from the rotor backplane 110.

In an implementation, the fastening member 300 is a screw, a pin, or the like. For example, when the fastening member 300 is the screw, the magnetic pole unit 210 is locked on the rotor backplane 110 by using the screw, to improve structural reliability of the magnetic pole unit 210 and the rotor backplane 110.

In this embodiment, the fastening member 300 is used to penetrate through the magnetic pole unit 210 and the rotor backplane 110 to fasten the magnetic pole unit 210 and the rotor backplane 110, and no additional fastening component is required to fasten the magnetic pole unit 210 and the rotor backplane 110 on a circumferential side of the magnetic pole unit 210. This can save space on the circumferential side of the magnetic pole unit 210, increase a quantity of magnets filled in a circumferential direction of the axial motor rotor 10, and improve magnetic performance of the axial motor rotor 10. In addition, no fastening component needs to be disposed between two adjacent magnetic pole units 210, so that a risk of magnetic leakage that is of a magnetic line of the magnetic pole unit 210 and that is from the fastening component between the two adjacent magnetic pole units 210 can be reduced.

In this application, in the axial motor rotor 10, the plurality of magnetic pole units 210 are arranged around. Each magnetic pole unit 210 is the part of the ring magnet structure 200. In comparison with the integrally formed ring magnet structure, the processing process of each magnetic pole unit 210 is simpler. In addition, the fastening member 300 penetrates into the magnetic pole unit 210 and the rotor backplane 110, to fasten the magnetic pole unit 210 and the rotor backplane 110, thereby improving the stability of connection between the magnetic pole unit 210 and the rotor backplane 110.

With reference to FIG. 5 and FIG. 6, in an implementation, a magnetic pole fastening hole 201 is provided on each magnetic pole unit 210 of all the magnetic pole units 210, a same quantity of backplane fastening holes 101 as magnetic pole fastening holes 201 are provided on the rotor backplane 110, the plurality of backplane fastening holes 101 of the rotor backplane 110 are provided in a one-to-one correspondence with the plurality of magnetic pole fastening holes 201, the axial motor rotor 10 includes a same quantity of fastening members 300 as the magnetic pole fastening holes 201, and the fastening member 300 is configured to fasten each magnetic pole unit 210 on the rotor backplane 110.

In an implementation, a magnetic pole fastening hole 201 is provided on a part of all the magnetic pole units 210, and a same quantity of backplane fastening holes 101 and a same quantity of fastening holes 201 as magnetic pole fastening holes 201 are provided on the rotor backplane 110, to fasten the part of magnetic pole units 210 on the rotor backplane 110, and another part of the magnetic pole units 210 may be fastened in another manner, for example, fastened by using an adhesive.

In an implementation, one or more than two magnetic pole fastening holes 201 are provided on one magnetic pole unit 210, and a same quantity of backplane fastening holes 101 as the magnetic pole fastening holes 201 in the magnetic pole unit 210 are provided on a part that is of the rotor backplane 110 and that corresponds to the magnetic pole unit 210. For example, two magnetic pole fastening holes 201 are provided on one magnetic pole unit 210, and two backplane fastening holes 101 are provided on a part that is of the rotor backplane 110 and that corresponds to the magnetic pole unit 210. Two fastening members 300 penetrate through the magnetic pole fastening holes 201 and the backplane fastening holes 101, to fasten the magnetic pole unit 210 and the rotor backplane 110.

In an implementation, quantities of magnetic pole fastening holes 201 in all the magnetic pole units 210 are the same, quantities of magnetic pole fastening holes 201 in a part of the magnetic pole units 210 are the same, or quantities of magnetic pole fastening holes 201 in a part of the magnetic pole units 210 are different, and locations of the magnetic pole fastening holes 201 in all the magnetic pole units 210 are the same or different, or locations of a part of the magnetic pole fastening holes 201 are the same or different. This is not limited in this application. To simplify a processing process, the quantities of magnetic pole fastening holes 201 in all the magnetic pole units 210 may be the same, and a location of a magnetic pole fastening hole 201 in each magnetic pole unit 210 is the same.

Still refer to FIG. 9. In a possible implementation, the magnetic pole fastening hole 201 penetrates through two opposite surfaces that are of the magnetic pole unit 210 and that are in the axial direction O of the rotor backplane 110. The fastening member 300 includes a fastening member body 310 and a fastening cap 320 that are connected to each other. The fastening cap 320 is disposed at an end that is of the fastening member body 310 and that is away from the rotor backplane 110. A radial size of the fastening cap 320 is greater than a radial size of the fastening member body 310. The magnetic pole fastening hole 201 includes a magnetic pole fastening hole body 2011 and a magnetic pole fastening groove 2012 located at an end that is of the magnetic pole fastening hole body 2011 and that is away from the rotor backplane 110. The magnetic pole fastening groove 2012 communicates with the magnetic pole fastening hole body 2011. A radial size of the magnetic pole fastening groove 2012 is greater than a radial size of the magnetic pole fastening hole body 2011. The fastening member body 310 passes through the magnetic pole fastening hole body 2011 and the backplane fastening hole 101. The fastening cap 320 is located in the magnetic pole fastening groove 2012 and is in contact with a groove bottom of the magnetic pole fastening groove 2012.

In this implementation, the fastening member 300 is a screw, and the fastening cap 320 is a screw cap. The magnetic pole unit 210 and the rotor backplane 110 are locked and fastened by using the screw, thereby improving structural reliability.

In this implementation, the fastening cap 320 is in contact with the groove bottom of the magnetic pole fastening groove 2012, so that the magnetic pole unit 210 is prevented from being detached from the rotor backplane 110 above the axial direction O.

In a possible implementation, a part that is of the fastening member 300 and that is located in the rotor backplane 110 is connected to an inner wall of the backplane fastening hole 101 through threads. In this implementation, a circumferential surface of an end that is of the fastening member body 310 and that is close to the rotor backplane 110 has a thread, and a thread is disposed in the backplane fastening hole 101. The end that is of the fastening member body 310 and that is close to the rotor backplane 110 and the backplane fastening hole 101 are connected through threads and are locked and fastened through rotation of the fastening member 300.

In a possible implementation, there is no thread on a circumferential surface of a part that is of the fastening member body 310 and that is located in the magnetic pole fastening hole body 2011. This is because a material of the magnetic pole unit 210 is generally relatively hard and is inconvenient for processing. In this case, the screw is a partially polished screw. When a magnetic pole material that is easy to process is used, a thread may alternatively be disposed in the magnetic pole fastening hole body 2011. In this case, a thread is disposed on a circumferential side of a body of the screw.

Refer to FIG. 10. FIG. 10 is a diagram of a structure of the magnetic pole unit 210, the rotor backplane 110, and the fastening member 300 according to an implementation of this application. In a possible implementation, the magnetic pole fastening hole 201 penetrates through two opposite surfaces that are of the magnetic pole unit 210 and that are in the axial direction O of the rotor backplane 110. The fastening member 300 includes a fastening member body 310 and a fastening nut 330. The magnetic pole fastening hole 201 includes a magnetic pole fastening hole body 2011 and a magnetic pole fastening groove 2012 located at an end that is of the magnetic pole fastening hole body 2011 and that is away from the rotor backplane 110. The magnetic pole fastening groove 2012 communicates with the magnetic pole fastening hole body 2011. A radial size of the magnetic pole fastening groove 2012 is greater than a radial size of the magnetic pole fastening hole body 2011. The fastening member body 310 passes through the magnetic pole fastening hole body 2011 and the backplane fastening hole 101. In addition, an end that is of the fastening member body 310 and that is away from the rotor backplane 110 extends into the magnetic pole fastening groove 2012. The fastening nut 330 is located in the magnetic pole fastening groove 2012. In addition, the fastening nut 330 is sleeved at the end that is of the fastening member body 310 and that is away from the rotor backplane 110, and is connected, through threads, to the end that is of the fastening member body 310 and that is away from the rotor backplane 110. In this implementation, a thread is disposed on a circumferential surface of the end that is of the fastening member body 310 and that is away from the rotor backplane 110, and the fastening nut 330 is connected, through threads, to the end that is of the fastening member body 310 and that is away from the rotor backplane 110, to fasten the magnetic pole unit 210 and the rotor backplane 110.

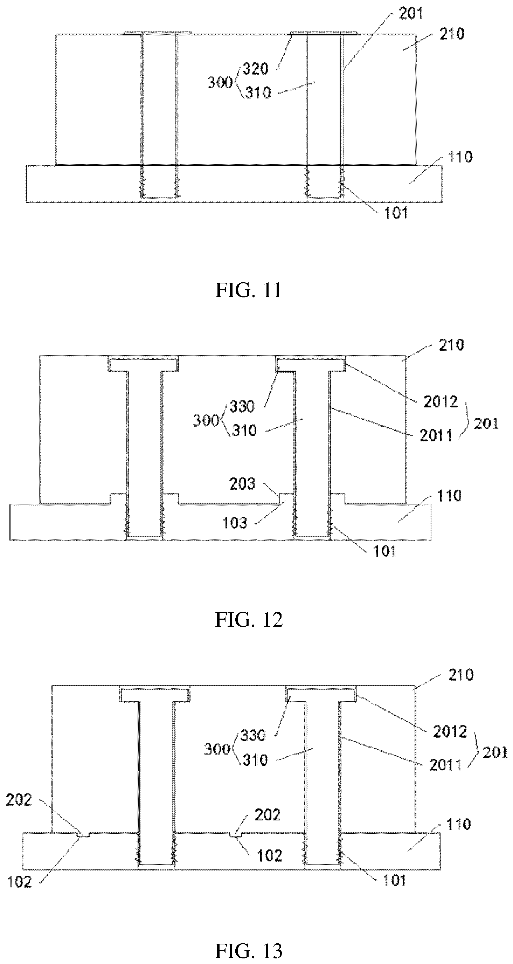

Refer to FIG. 11. FIG. 11 is a diagram of a structure of the magnetic pole unit 210, the rotor backplane 110, and the fastening member 300 according to an implementation of this application. In a possible implementation, the magnetic pole fastening hole 201 penetrates through two opposite surfaces that are of the magnetic pole unit 210 and that are in the axial direction O of the rotor backplane 110. The fastening member 300 includes a fastening member body 310 and a fastening cap 320 that are connected to each other. The fastening cap 320 is disposed at an end that is of the fastening member body 310 and that is away from the rotor backplane 110. A radial size of the fastening cap 320 is greater than a radial size of the fastening member body 310. The fastening member body 310 passes through the magnetic pole fastening hole 201 and the backplane fastening hole 101. The fastening cap 320 is located on a surface that is of the magnetic pole unit 210 and that faces away from the rotor backplane 110, and is in contact with the surface that is of the magnetic pole unit 210 and that faces away from the rotor backplane 110. In this implementation, the fastening cap 320 is located on the surface that is of the magnetic pole unit 210 and that faces away from the rotor backplane 110. The fastening cap 320 is in contact with the surface of the magnetic pole unit 210, so that the magnetic pole unit 210 is prevented from being detached from the rotor backplane 110 above the axial direction.

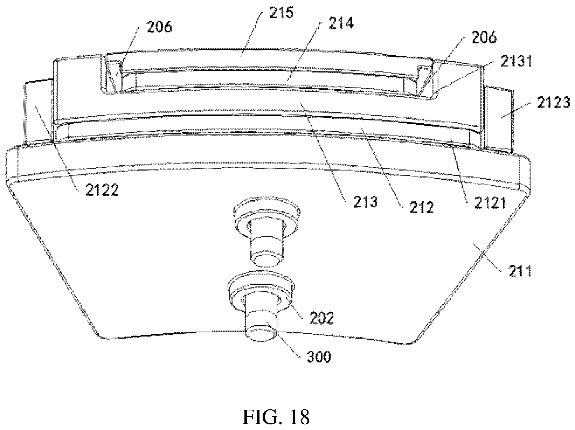

In a possible implementation, the backplane fastening hole 101 penetrates through two opposite surfaces that are of the rotor backplane 110 and that are in the axial direction of the rotor backplane 110. An end that is of the fastening member 300 and that is adjacent to the rotor backplane 110 is located in the backplane fastening hole 101 (as shown in FIG. 10 and FIG. 11), or extends through the backplane fastening hole 101 to outside of the backplane fastening hole 101 (as shown in FIG. 18). When the end that is of the fastening member 300 and that is adjacent to the rotor backplane 110 extends through the backplane fastening hole 101 to an outer side of the backplane fastening hole 101, a nut may be further used to fasten a part that is of the fastening member 300 and that is located on the outer side of the backplane fastening hole 101, and a groove may be provided on a side that is of a cover 14 and that faces the axial motor rotor 10, to accommodate the part that is of the fastening member 300 and that penetrates out of the outer side of the backplane fastening hole 101, so that the cover 14 is flat.

Still refer to FIG. 9. In a possible implementation, a magnetic pole positioning protruding portion 202 is disposed on a surface that is of the magnetic pole unit 210 and that faces the rotor backplane 110, a backplane positioning groove 102 is provided on a surface that is of the rotor backplane 110 and that faces the magnetic pole unit 210, and the magnetic pole positioning protruding portion 202 is located in the backplane positioning groove 102. The magnetic pole positioning protruding portion 202 cooperates with the backplane positioning groove 102, to implement positioning of the magnetic pole unit 210 and the rotor backplane 110, thereby improving installation efficiency and accuracy. One magnetic pole positioning protruding portion 202 and one backplane positioning groove 102 are referred to as a pair of positioning components. In an implementation, there may be one pair or more than two pairs of positioning components. In an implementation, when there are two pairs of positioning components, the two pairs of positioning components may be arranged in a radial direction, or arranged in the circumferential direction C of the rotor backplane 110. In another implementation, when there are two or more pairs of positioning components, an arrangement manner of the positioning components may be set according to a requirement.

Still refer to FIG. 9. In a possible implementation, the magnetic pole positioning protruding portion 202 is disposed around a circumferential side of the magnetic pole fastening hole 201. A magnetic pole positioning through hole 2021 is provided in the magnetic pole positioning protruding portion 202. The magnetic pole positioning through hole 2021 communicates with the magnetic pole fastening hole 201. The backplane positioning groove 102 is provided around a circumferential side of the backplane fastening hole 101. The fastening member 300 sequentially passes through the magnetic pole fastening hole 201, the magnetic pole positioning through hole 2021, and the backplane fastening hole 101. In this implementation, the backplane positioning groove 102 communicates with the backplane fastening hole 101. In some implementations, a radial size of an end that is of the backplane fastening hole 101 and that is close to the magnetic pole unit 210 may alternatively be set to be relatively large, to accommodate the magnetic pole positioning protruding portion 202. In this implementation, the magnetic pole positioning protruding portion 202 is disposed around the circumferential side of the magnetic pole fastening hole 201, so that an occupied position on the magnetic pole unit 210 can be reduced, and it can be avoided that magnetic performance of the magnetic pole unit 210 is affected because positioning components are disposed at different positions of the magnetic pole unit 210. The backplane positioning groove 102 is provided around the circumferential side of the backplane fastening hole 101, so that it can be avoided that grooves are provided at different positions of the rotor backplane 110, and structural strength of the rotor backplane 110 is ensured.

Refer to FIG. 12. FIG. 12 is a diagram of a structure of the magnetic pole unit 210, the rotor backplane 110, and the fastening member 300 according to an implementation of this application. In a possible implementation, a magnetic pole positioning groove 203 is provided on a surface that is of the magnetic pole unit 210 and that faces the rotor backplane 110, a backplane positioning protruding portion 103 is disposed on a surface that is of the rotor backplane 110 and that faces the magnetic pole unit 210, and the backplane positioning protruding portion 103 is located in the magnetic pole positioning groove 203. In this implementation, the magnetic pole positioning groove 203 is provided on the magnetic pole unit 210, and the backplane positioning protruding portion 103 is disposed on the rotor backplane 110. The backplane positioning protruding portion 103 cooperates with the magnetic pole positioning groove 203, to implement positioning of the magnetic pole unit 210 and the rotor backplane 110, thereby improving installation efficiency and accuracy. In an implementation, the magnetic pole positioning groove 203 may be provided around the magnetic pole fastening hole 201, and the backplane positioning protruding portion 103 may be disposed around the backplane fastening hole 101.

Refer to FIG. 13. FIG. 13 is a diagram of a structure of the magnetic pole unit 210, the rotor backplane 110, and the fastening member 300 according to an implementation of this application. In a possible implementation, a magnetic pole positioning protruding portion 202 and the magnetic pole fastening hole 201 are provided at intervals, and a backplane positioning groove 102 and the backplane fastening hole 101 are provided at intervals. A shape of the magnetic pole positioning protruding portion 202 and a shape of the magnetic pole fastening hole 201 may be circles, squares, triangles, or sectors. This is not limited herein.

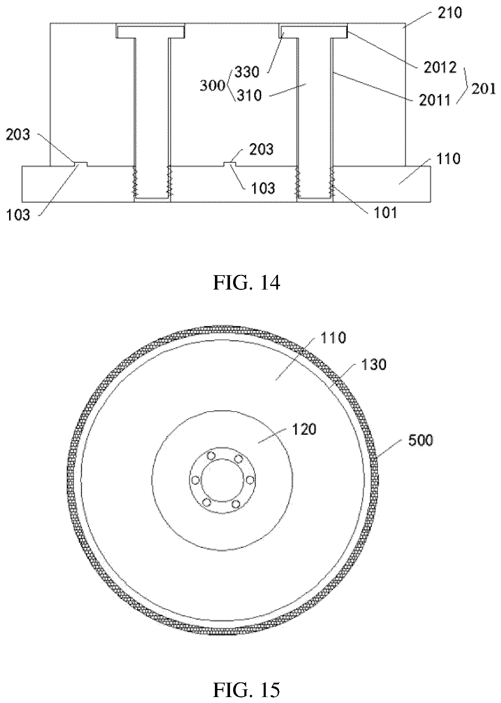

Refer to FIG. 14. FIG. 14 is a diagram of a structure of the magnetic pole unit 210, the rotor backplane 110, and the fastening member 300 according to an implementation of this application. In a possible implementation, a magnetic pole positioning groove 203 and the magnetic pole fastening hole 201 are provided at intervals, and a backplane positioning protruding portion 103 and the backplane fastening hole 101 are provided at intervals. A shape of the magnetic pole positioning groove 203 and a shape of the magnetic pole fastening hole 201 may be circles, squares, triangles, or sectors. This is not limited herein.

Still refer to FIG. 7 and FIG. 8. In a possible implementation, the axial motor rotor 10 further includes a rotor inner support portion 120 and a rotor outer support portion 130 (as shown in FIG. 7) that are coaxially disposed. The rotor inner support portion 120 is located on an inner circumferential side of the rotor backplane 110 and protrudes toward a side of the rotor backplane 110 relative to the rotor backplane 110. The rotor outer support portion is located on an outer circumferential side of the rotor backplane 110 and protrudes toward the side relative to the rotor backplane 110. Two ends that are of each magnetic pole unit 210 and that are in the radial direction R of the rotor backplane 110 are respectively connected to the rotor inner support portion 120 and the rotor outer support portion 130 (as shown in FIG. 8).

The rotor inner support portion 120 and the rotor outer support portion 130 protrude toward the same side of the rotor backplane 110 relative to the rotor backplane 110. In this implementation, the rotor inner support portion 120 and the rotor outer support portion 130 protrude from a side that is of the rotor backplane 110 and that faces the stator 12. The rotor inner support portion 120 and the rotor outer support portion 130 are in a circular ring shape. The plurality of magnetic pole units 210 are located between the rotor inner support portion 120 and the rotor outer support portion 130 in the radial direction R of the rotor backplane 110. Two ends of each magnetic pole unit 210 are respectively connected to the rotor inner support portion 120 and the rotor outer support portion 130. The rotor backplane 110 is sleeved on the motor shaft 11 by using the rotor inner support portion 120, and the rotor inner support portion 120 may be fastened to the motor shaft 11 by using a screw. In this implementation, the rotor backplane 110, the rotor inner support portion 120, and the rotor outer support portion 130 form a rotor fastening sleeve 100. The rotor fastening sleeve 100 is sleeved on the motor shaft 11. The rotor backplane 110, the rotor inner support portion 120, and the rotor outer support portion 130 enclose a backplane groove 104 (as shown in FIG. 7 and FIG. 9). The plurality of magnetic pole units 210 are located in the backplane groove 104. An adhesive is filled between the plurality of magnetic pole units 210 and an inner wall of the backplane groove 104 to enhance reliability of connections between the magnetic pole units 210 and the rotor backplane 110, the rotor inner support portion 120, and the rotor outer support portion 130. During assembly, the magnetic pole unit 210 and the rotor backplane 110 may be first pre-fastened by using an adhesive, then fastened by using the fastening member 300, and finally filled with an adhesive, to enhance structural reliability of the axial motor rotor 10 and enhance structural strength.

In this implementation, the rotor backplane 110, the rotor inner support portion 120, and the rotor outer support portion 130 are of an integrated structure, to improve structural strength. In this implementation, the rotor backplane 110, the rotor inner support portion 120, and the rotor outer support portion 130 are made of a non-magnetic conductive material.

In some implementations, the rotor fastening sleeve 100 may include only the rotor backplane 110. The magnetic pole unit 210 is fastened on the rotor backplane 110 by using the fastening member 300, and an adhesive may be disposed on opposite surfaces of the rotor backplane 110 and the magnetic pole unit 210, to enhance structural stability.

In some implementations, the rotor fastening sleeve 100 may include only the rotor backplane 110 and the rotor inner support portion 120. Opposite surfaces of the magnetic pole unit 210 and the rotor backplane 110 are bonded by using an adhesive, and opposite surfaces of the magnetic pole unit 210 and the rotor inner support portion 120 are bonded by using an adhesive, to enhance structural stability.

In some implementations, the rotor fastening sleeve 100 may include only the rotor backplane 110 and the rotor outer support portion 130. Opposite surfaces of the magnetic pole unit 210 and the rotor backplane 110 are bonded by using an adhesive, and opposite surfaces of the magnetic pole unit 210 and the rotor outer support portion 130 are bonded by using an adhesive, to enhance structural stability.

Refer to FIG. 15. FIG. 15 is a diagram of a structure of the rotor fastening sleeve 100 according to an implementation of this application. In a possible implementation, the axial motor rotor 10 further includes a reinforcing ring 500. The reinforcing ring 500 is sleeved on an outer side of the rotor outer support portion 130. A high-strength reinforcing ring 500 with interference is wound or pressed into the outer side of the rotor outer support portion 130, to improve structural strength. In an implementation, the reinforcing ring 500 is a carbon fiber ring or a glass fiber ring.

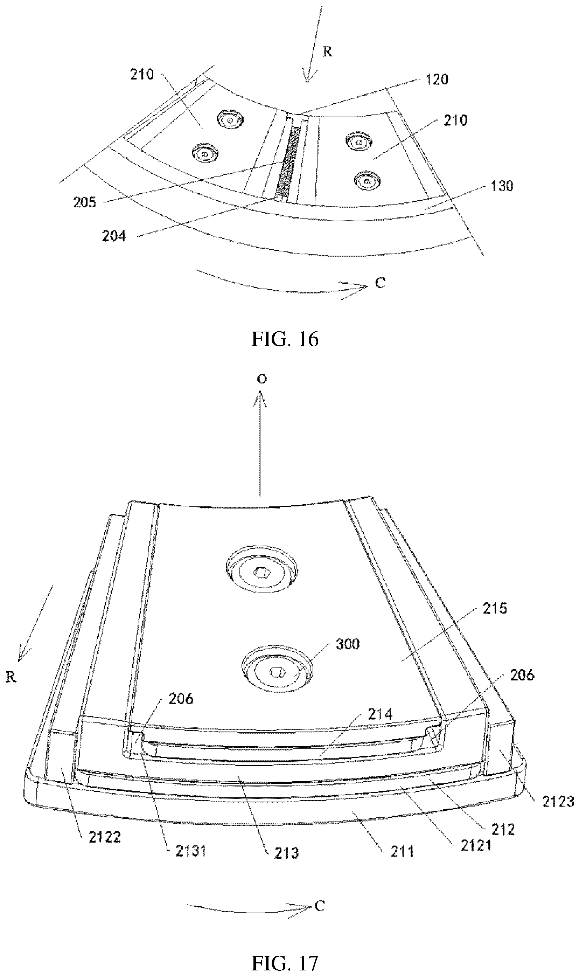

Still refer to FIG. 5 and FIG. 16. FIG. 16 is a partial diagram of the axial motor rotor 10 according to an implementation of this application. In a possible implementation, there is an inter-magnetic gap 204 between two adjacent magnetic pole units 210. The axial motor rotor 10 further includes a filling magnet 205, and the filling magnet 205 is filled in the inter-magnetic gap 204. In addition, two ends that are of the filling magnet 205 and that are in the radial direction R of the rotor backplane 110 are respectively disposed at intervals with the rotor inner support portion 120 and the rotor outer support portion 130. Disposing at intervals includes keeping a physical spacing, so that there is a specific distance between the rotor inner support portion 120 and the filling magnet 205, and there is a specific distance between the rotor outer support portion 130 and the filling magnet 205. Alternatively, insulation materials are disposed at two ends of the filling magnet 205, to avoid that the filling magnet 205 is electrically connected to the rotor inner support portion 120 and the rotor outer support portion 130, thereby avoiding an increase in an eddy current caused by conductivity between the filling magnet 205 and the rotor inner support portion 120 and the rotor outer support portion 130, and reducing a magnetic line loss of the magnetic pole unit 210. In an implementation, the filling magnet 205 is a soft magnetic composite magnet, and the soft magnetic composite magnet is made of a soft magnetic composite material. The soft magnetic composite material is a soft magnetic material formed by evenly dispersing magnetic particles in a non-magnetic object, and provides a path for magnetic line conduction for the two adjacent magnetic pole units 210.

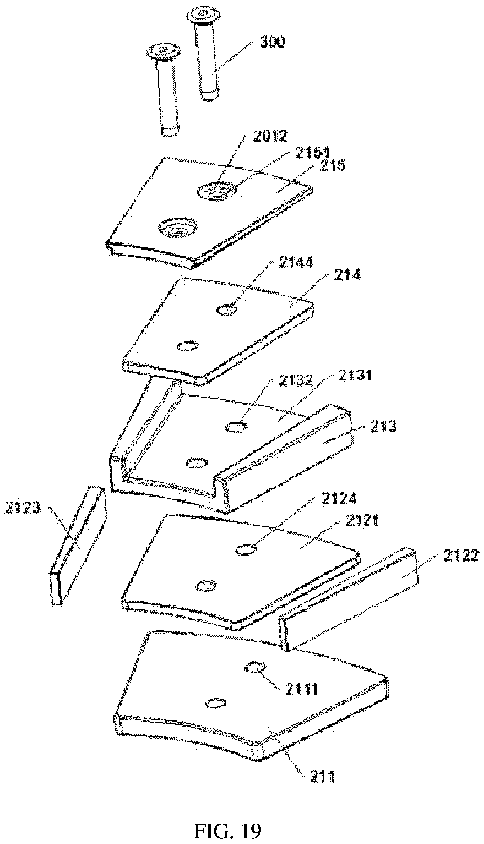

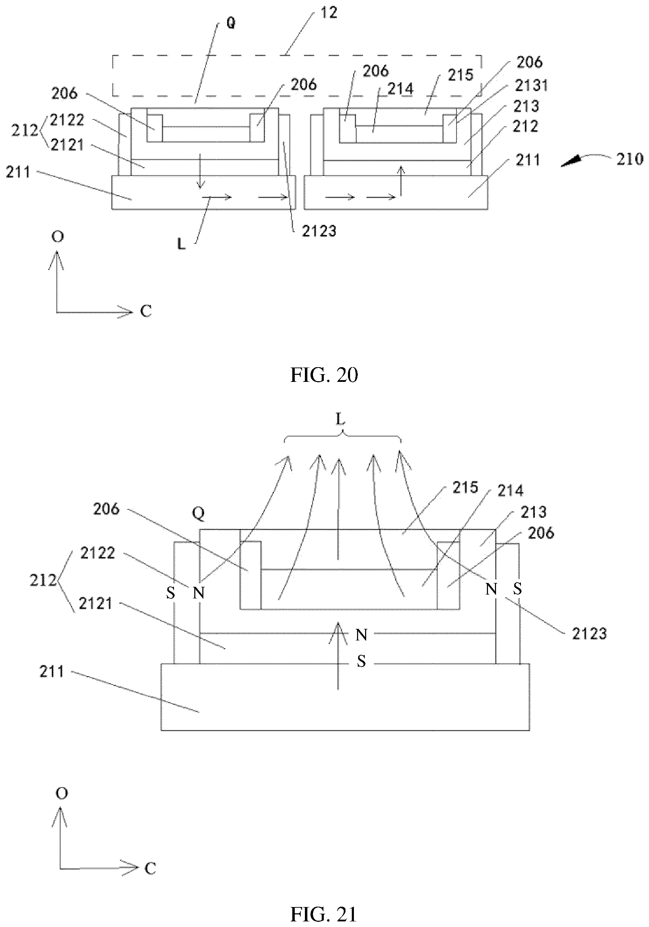

Refer to FIG. 17, FIG. 18, and FIG. 19. FIG. 17 and FIG. 18 are diagrams of a structure of the magnetic pole unit 210 according to an implementation of this application. FIG. 19 is an exploded view of the magnetic pole unit 210 in FIG. 17. In a possible implementation, the magnetic pole unit 210 includes a first soft magnet 211 and a first permanent magnet 212. In addition, at least a part of the first soft magnet 211 and at least a part of the first permanent magnet 212 are stacked in the axial direction O of the rotor backplane 110. The magnetic pole fastening hole 201 penetrates through the first soft magnet 211 and the first permanent magnet 212. The first soft magnet 211 facilitates circulation of a magnetic line L, and provides a smooth circulation path for the magnetic line L. Refer to FIG. 20. FIG. 20 is a diagram of a magnetic circuit of the axial motor rotor 10 according to an implementation of this application. When the first soft magnet 211 is located on a side that is of the first permanent magnet 212 and that faces away from the air gap Q, a magnetic line L of the first permanent magnet 212 flowing outward may flow into a first permanent magnet 212 in an adjacent magnetic pole unit 210 through the first soft magnet 211. In comparison with that a magnetic line L of the first permanent magnet 212 flows into a first permanent magnet 212 in a connected magnetic pole unit 210 through air, the first soft magnet 211 is more conducive to circulation of the magnetic line L than the air, and can reduce a magnetic flux loss.

In a possible implementation, two adjacent magnetic pole units 210 are a pair of pole magnetic pole units. Magnetic charging directions of first permanent magnets 212 in the two adjacent magnetic pole units 210 are opposite, so that magnetic fluxes of the two adjacent magnetic pole units 210 form a loop. In one implementation, an even number of magnetic pole units 210 are included. For example, when there are N magnetic pole units 210, it is indicated that the axial motor rotor 10 has N/2 pairs of magnetic pole units, where N is an even number.

In an implementation, the first permanent magnet 212 is also referred to as magnetic steel. Common permanent magnet materials are classified into an aluminum-nickel-cobalt permanent magnet alloy, a ferro-chromium-cobalt permanent magnet alloy, a permanent magnet ferrite, a rare earth permanent magnet material (neodymium iron boron Nd₂Fe₁₄B), a composite permanent magnet material, and the like. In an implementation, the first soft magnet 211 is a magnet made of a soft magnetic composite material.

Refer to FIG. 17 again. In a possible implementation, a circumferential size of the magnetic pole unit 210 gradually increases from an end close to the rotor inner support portion 120 to an end away from the rotor inner support portion 120. Because the rotor inner support portion 120 is located on an inner side, the rotor outer support portion 130 is located on an outer side, and a circumferential size of the rotor outer support portion 130 is greater than a circumferential size of the rotor inner support portion 120, space between the rotor outer support portion 130 and the rotor inner support portion 120 gradually increases from an area of a region close to the rotor inner support portion 120 to an area of a region close to the rotor outer support portion 130. In this implementation, the magnetic pole unit 210 is disposed as above. In this way, the magnetic pole unit 210 is in a sector shape, to adapt to the space between the rotor outer support portion 130 and the rotor inner support portion 120, so that a larger area of the magnetic pole unit 210 is filled between the rotor outer support portion 130 and the rotor inner support portion 120. This fully utilizes internal space of the rotor backplane 110, increases an area of the magnetic pole unit 210, increases a magnetic density, and increases an output torque.

In a possible implementation, the first permanent magnet 212 is contiguous in the radial direction of the rotor backplane 110. If the first permanent magnet 212 is discontiguous in the radial direction of the rotor backplane 110, the permanent magnet includes three sub-magnetic pole units distributed in the radial direction. The permanent magnet usually has high structural strength and is hard to process. For example, the permanent magnet is magnetic steel, and it is difficult to process and align surfaces of two sides that are of three permanent magnets and that are in the circumferential direction C, resulting in high processing costs. If the surfaces of the two sides that are of the three permanent magnets and that are in the circumferential direction C are not aligned, space in the backplane groove 104 is wasted. Consequently, a quantity of filled permanent magnets is reduced, and performance of the axial motor 1 is reduced. In addition, the three sub-magnetic pole units need three sets of stamping dies, and a quantity of magnetic steel abrasive tools is relatively large. In addition, to ensure coaxiality of inner and outer arc walls of the three sub-magnetic pole units, high processing precision is required, resulting in a complex processing process. In this implementation, the first permanent magnet 212 is contiguous in the radial direction R of the rotor backplane 110. The first permanent magnet 212 is of a contiguous integral structure in the radial direction R, so that surfaces of two sides that are of the first permanent magnet 212 and that are in the circumferential direction C are aligned. This is simple to process, and also helps increase a volume of the magnetic pole unit 210 and increase a magnetic density.

In a possible implementation, a projection of the first permanent magnet 212 on the first soft magnet 211 in the axial direction O of the rotor backplane 110 is located in the first soft magnet 211 (as shown in FIG. 17). In this implementation, a circumferential size of the first soft magnet 211 is greater than a circumferential size of the first permanent magnet 212. This is conducive to converging magnetic flux lines L and conducive to magnetic conduction. In this implementation, an area of a largest surface of the first permanent magnet 212 is less than an area of a largest surface of the first soft magnet 211, so that most or all of magnetic lines L flowing out of the first permanent magnet 212 can enter the first soft magnet 211, be converged by using the first soft magnet 211, and flow into the adjacent magnetic pole unit 210 through the first soft magnet 211. Both the largest surface of the first soft magnet 211 and the largest surface of the first permanent magnet 212 vertically intersect the axial direction O of the rotor backplane 110.

Still refer to FIG. 17, FIG. 18, and FIG. 19. In a possible implementation, the magnetic pole unit 210 further includes a second soft magnet 213. The first permanent magnet 212 includes a first body portion 2121, a first portion 2122, and a second portion 2123. The first soft magnet 211, the first body portion 2121, and the second soft magnet 213 are stacked in the axial direction O of the rotor backplane 110. The first portion 2122 and the second portion 2123 are arranged on two sides that are of the first body portion 2121 and the second soft magnet 213 and that are in the circumferential direction C of the rotor backplane 110. As shown in FIG. 21, in this implementation, the first soft magnet 211 and the second soft magnet 213 are respectively disposed on two sides that are of the first permanent magnet 212 and that are in the axial direction O, so that magnetic lines L of the two sides that are of the first permanent magnet 212 and that are in the axial direction O are converged by soft magnets, thereby increasing an air gap magnetic density. In this implementation, the first portion 2122 and the second portion 2123 are disposed. This is conducive to converging magnetic lines L. When the first portion 2122 and the second portion 2123 protrude toward a side of the air gap Q, the magnetic lines L are converged into a winding coil on the stator 11, so that an air gap magnetic density waveform is close to a sine wave, thereby increasing output torque and reducing torque fluctuation. In this implementation, a cross section of the first permanent magnet 212 is in a "U" shape.

In a possible implementation, the first permanent magnet 212 is magnetic steel, and a circumferential size of the first body portion 2121 gradually increases from an end close to the rotor inner support portion 120 to an end away from the rotor inner support portion 120. In this way, the first body portion 2121 is in a sector shape. The first body portion 2121 is also magnetic steel, and the magnetic steel is in a sector shape, so that the space in the backplane groove 104 can be fully used, thereby avoiding insufficient motor performance caused by a relatively small size of a magnetic pole unit 210 occupied by the magnetic steel at an outer diameter. The magnetic steel is in the sector shape. This can effectively improve the performance of the axial motor. In addition, the magnetic steel is built in the magnetic pole unit 210, so that a reluctance torque component of the axial motor 1 is increased. In this way, the axial motor 1 can still maintain relatively large power under a high-speed working condition.

In a possible implementation, a magnetic charging direction of the first body portion 2121 is the same as the axial direction O of the rotor backplane 110 (as shown in FIG. 21), and magnetic charging directions of the first portion 2122 and the second portion 2123 intersect with the axial direction O of the rotor backplane 110. In this way, magnetic lines L in the first portion 2122 and the second portion 2123 flow in or out from a middle of the first portion 2122 and the second portion 2123. The magnetic lines L that flow in or out from the middle of the first portion 2122 and the second portion 2123 attract magnetic lines L that flow in or out of the first body portion 2121 to be converged more centrally (as shown in FIG. 21), so that a magnetic density waveform obtained when a magnetic line passes through the air gap is close to a sine wave, thereby increasing output torque and reducing torque fluctuation. In this implementation, the magnetic charging direction of the first body portion 2121 is perpendicular to a maximum surface of the first body portion 2121, the magnetic charging direction of the first portion 2122 is perpendicular to a maximum surface of the first portion 2122, and the magnetic charging direction of the second portion 2123 is perpendicular to a maximum surface of the second portion 2123.

In a possible implementation, in the first permanent magnet 212, the first body portion 2121, the first portion 2122, and the second portion 2123 are of structures independent of each other. This facilitates processing. For example, when the first permanent magnet 212 is magnetic steel, the magnetic steel has relatively high strength and is not easy to be shaped. In this implementation, the first permanent magnet 212 is disposed as a "U"-shaped structure by using three independent structures. This facilitates processing.

Still refer to FIG. 17. In a possible implementation, the magnetic pole unit 210 further includes a second permanent magnet 214. A second soft magnetic groove 2131 is provided on a surface that is of the second soft magnet 213 and that faces away from the first body portion 2121. The second permanent magnet 214 is located in the second soft magnetic groove 2131. In this implementation, the second permanent magnet 214 and the first permanent magnet 212 are jointly configured to generate magnetic lines L, increase a magnetic flux, increase output torque, and improve motor performance.

In an implementation, a magnetization direction of the second permanent magnet 214 is a direction perpendicular to a maximum surface of the second permanent magnet 214, or a magnetization direction of the second permanent magnet 214 is the axial direction O. In an implementation, the first body portion 2121 and the second permanent magnet 214 are axially magnetized permanent magnets, and the first portion 2122 and the second portion 2123 are tangentially magnetized permanent magnets.

In a possible implementation, the first soft magnet 211 and the second soft magnet 213 are magnets made of soft magnetic composite materials. The magnet made of the soft magnetic composite material is a magnet formed through processing by using a soft magnetic composite material, and can reduce a high-frequency eddy current loss and increase an application frequency. In addition, the soft magnetic composite material is easy to be shaped, and can be processed into a soft magnet structure of a required shape. For example, the second soft magnetic groove 2131 may be processed in the second soft magnet 213 (as shown in FIG. 17). The second soft magnetic groove 2131 matches a shape of the second permanent magnet 214, so that the second permanent magnet 214 may be accommodated in the second soft magnetic groove 2131. Two sides that are of the second permanent magnet 214 and that are in the circumferential direction C are spaced by two side walls of the second soft magnetic groove 2131. A magnetic line of the second permanent magnet 214 is transferred to the second soft magnet 213, to reduce a magnetic line entering the air gap Q.

In a possible implementation, the first permanent magnet 212 and the second permanent magnet 214 are magnetic steel.

In a possible implementation, a projection of the second permanent magnet 214 on the first body portion 2121 in the axial direction O of the rotor backplane 110 is located in the first body portion 2121 (as shown in FIG. 17). In this implementation, the second permanent magnet 214 and the first body portion 2121 are disposed as above, so that a size of the second permanent magnet 214 in the circumferential direction C is less than the size of the first body portion 2121 in the circumferential direction C. When the second permanent magnet 214 is closer to the air gap Q than the first body portion 2121, an area of magnetic lines of the second permanent magnet 214 is less than an area of magnetic lines L of the first body portion 2121, and magnetic lines L are gradually converged from the first body portion 2121 toward the air gap Q. This helps increase a magnetic density obtained when the magnetic line passes through the air gap Q. In this implementation, the maximum surface of the second permanent magnet 214 is smaller than the maximum surface of the first body portion 2121, and both the maximum surface of the second permanent magnet 214 and the maximum surface of the first body portion 2121 intersect with the axial direction O of the rotor inner support portion 120.

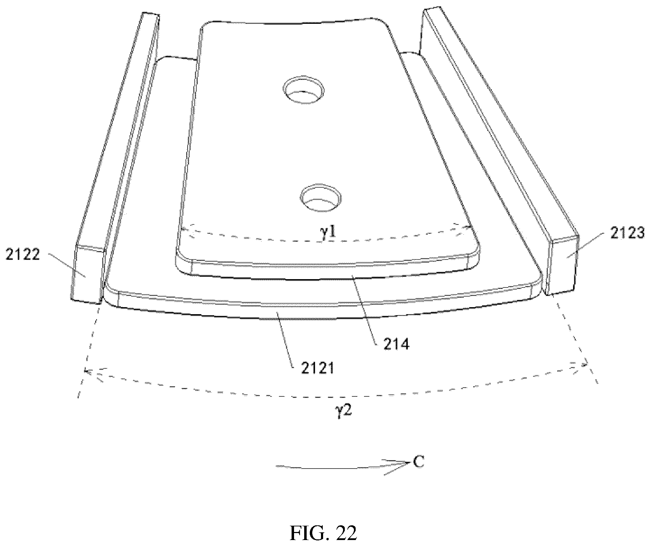

Refer to FIG. 22. FIG. 22 is a diagram of a structure of the first permanent magnet 212 and the second permanent magnet 214 in the magnetic pole unit 210 according to an implementation of this application. In a possible implementation, a radian of the second permanent magnet 214 in the circumferential direction C of the rotor backplane 110 is less than a radian of the first body portion 2121 in the circumferential direction C of the rotor backplane 110. As shown in FIG. 22, the radian of the second permanent magnet 214 in the circumferential direction C is γ1, and the radian of the first body portion 2121 in the circumferential direction C is γ2, where γ1 is less than γ2, so that the magnetic pole unit 210 is more conducive to converging magnetic lines, and a magnetic density obtained when a magnetic line entering the air gap Q is closer to a sine wave.

Still refer to FIG. 17, FIG. 18, and FIG. 19. In a possible implementation, the magnetic pole unit 210 further includes a third soft magnet 215. The third soft magnet 215 is located on a side that is of the second permanent magnet 214 and that is away from the rotor backplane 110. Two sides that are of the third soft magnet 215 and that are in the circumferential direction C are at most partially in contact with the second soft magnet 213. In this implementation, the third soft magnet 215 helps to guide the magnetic lines L generated by the second permanent magnet 214 and the first permanent magnet 212 into the air gap Q. The two sides that are the third soft magnet 215 and that are in the circumferential direction C are at most partially in contact with the second soft magnet 213, so that a magnetic internal gap 206 may be enclosed between the second soft magnet 213, the second permanent magnet 214, and the third soft magnet 215 (as shown in FIG. 17), and the magnetic line L generated by the second permanent magnet 214 does not enter the second soft magnet 213 through the two sides that are the third soft magnet 215 and that are in the circumferential direction C. In this implementation, a part of the two sides that are the third soft magnet 215 and that are in the axial direction C is in contact with an inner wall of the second soft magnet 213, to improve structural strength of the third soft magnet 215 and the second soft magnet 213. When the two sides that are the third soft magnet 215 and that are in the circumferential direction C are at most partially in contact with the second soft magnet 213, it is avoided that the magnetic line L entering the air gap Q is reduced due to magnetic leakage.

In some implementations, a permanent magnet may be disposed between the third soft magnet 215 and the second soft magnet 213, or the second permanent magnet 214 is made into a structure with a "U"-shaped cross section, and a part of two ends that are of the second permanent magnet 214 and that are in the circumferential direction C separates the third soft magnet 215 from the second soft magnet 213. In this way, structural strength can be improved, and an air gap magnetic density can also be increased.

In a possible implementation, at least one of the following: the first soft magnet 211, the second soft magnet 213, and the third soft magnet 215 is a magnet made of a soft magnetic composite material. In this embodiment, the first soft magnet 211, the second soft magnet 213, and the third soft magnet 215 are all magnets made of soft magnetic composite materials.

In an implementation, size parameters of parts in the magnetic pole unit 210 may be adjusted according to a requirement. For example, parameters such as thicknesses, radians, and radial sizes of the first permanent magnet 212 and the first body portion 2121 may be set, parameters such as thicknesses, radial sizes, and widths of the first portion 2122 and the second portion 2123 may be set, and parameters such as thicknesses, radians, and radial sizes of the first soft magnet 211 and the second soft magnet 213 may be set. In this way, the axial motor 1 has better performance, for example, performance indicators such as required permanent magnet usage, torque output, and alternating-direct axis inductance can be obtained.

Still refer to FIG. 19. In a possible implementation, a first sub-hole 2111 that penetrates through two surfaces of the first soft magnet 211 is provided on the first soft magnet 211, a second sub-hole 2124 that penetrates through two surfaces of the first body portion 2121 is provided on the first body portion 2121 of the first permanent magnet 212, and a third sub-hole 2132 that penetrates through two surfaces of the second soft magnet 213 is provided on the second soft magnet 213, a fourth sub-hole 2144 that penetrates through two surfaces of the second permanent magnet 214 is provided on the second permanent magnet 214, and a fifth sub-hole 2151 that penetrates through two surfaces of the third soft magnet 215 is provided on the third soft magnet 215. In this implementation, the first sub-hole 2111, the second sub-hole 2124, the third sub-hole 2132, the fourth sub-hole 2144, and the fifth sub-hole 2151 are communicated. The first sub-hole 2111, the second sub-hole 2124, the third sub-hole 2132, the fourth sub-hole 2144, and the fifth sub-hole 2151 form a magnetic pole fastening hole body 2011 in the magnetic pole fastening hole 201. In this implementation, the magnetic pole fastening groove 2012 described above is provided on the third soft magnet 215, and the magnetic pole fastening groove 2012 communicates with the fifth sub-hole 2151.

In an implementation, when the magnetic pole unit 210 has two or more magnetic pole fastening holes 201, a same quantity of first sub-holes 2111, second sub-holes 2124, third sub-holes 2132, fourth sub-holes 2144, and fifth sub-holes 2151 are respectively provided on the first soft magnet 211, the first body portion 2121 of the first permanent magnet 212, the second soft magnet 213, the second permanent magnet 214, and the third soft magnet 215, to form the plurality of magnetic pole fastening holes 201.

In a possible implementation, when the magnetic pole unit 210 includes only a first soft magnet 211 and a first permanent magnet 212, a magnetic pole fastening groove 2012 is provided on the first permanent magnet 212, a first sub-hole 2111 and a second sub-hole 2124 are respectively provided on the first soft magnet 211 and the first permanent magnet 212, the second sub-hole 2124 communicates with the magnetic pole fastening groove 2012, and the first sub-hole 2111 and the second sub-hole 2124 form a magnetic pole fastening hole body 2011.

In a possible implementation, when the magnetic pole unit 210 includes only a first soft magnet 211, a first permanent magnet 212, and a second soft magnet 213, a magnetic pole fastening groove 2012 is provided on the second permanent magnet 214, a first sub-hole 2111, a second sub-hole 2124, and a third sub-hole 2132 are respectively provided on the first soft magnet 211, the first permanent magnet 212, and the second soft magnet 213, and the third sub-hole 2132 communicates with the magnetic pole fastening groove 2012.

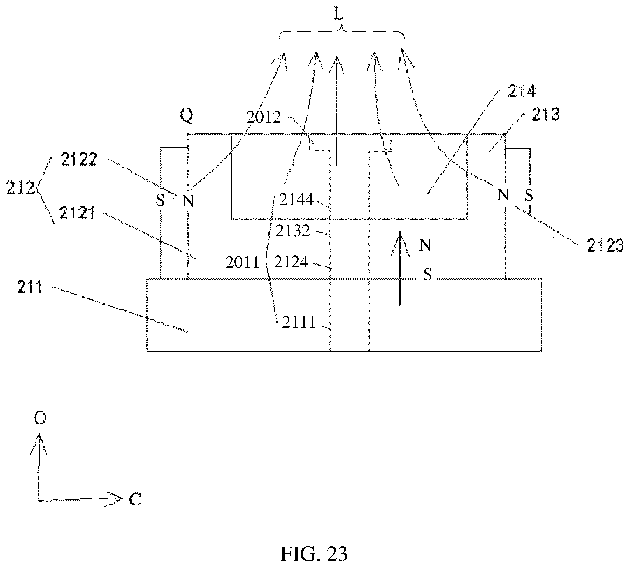

Refer to FIG. 23. FIG. 23 is a diagram of a structure of the axial motor rotor 10 according to a second embodiment of this application. In this embodiment, a difference from a first embodiment is that there is no third soft magnet 215. A magnetic pole unit 210 includes a first soft magnet 211, a first permanent magnet 212, a second soft magnet 213, and a second permanent magnet 214. The first soft magnet 211, a first body portion 2121 of the first permanent magnet 212, the second soft magnet 213, and the second permanent magnet 214 are sequentially stacked in an axial direction O. In this implementation, a magnetic pole fastening hole 201 penetrates through the first soft magnet 211, the first body portion 2121 of the first permanent magnet 212, the second soft magnet 213, and the second permanent magnet 214. A fastening member 300 penetrates through the first soft magnet 211, the first body portion 2121 of the first permanent magnet 212, the second soft magnet 213, and the second permanent magnet 214.

In a possible implementation, when the magnetic pole unit 210 includes only a first soft magnet 211, a first permanent magnet 212, a second soft magnet 213, and a second permanent magnet 214, a magnetic pole fastening groove 2012 is provided on the second permanent magnet 214, a first sub-hole 2111, a second sub-hole 2124, a third sub-hole 2132, and a fourth sub-hole 2144 are respectively provided on the first soft magnet 211, the first permanent magnet 212, the second soft magnet 213, and the second permanent magnet 214, the fourth sub-hole 2144 communicates with the magnetic pole fastening groove 2012, the first sub-hole 2111, the second sub-hole 2124, the third sub-hole 2132, and the fourth sub-hole 2144 form a magnetic pole fastening hole body 2011.

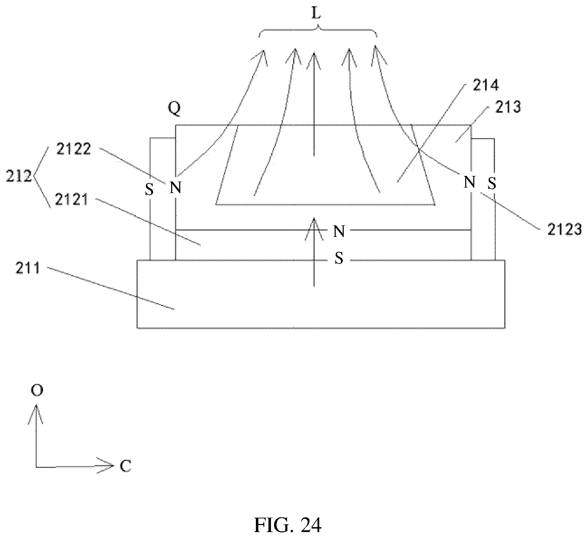

Refer to FIG. 24. FIG. 24 is a diagram of a structure of a magnetic pole unit 210 in the axial motor rotor 10 according to a third embodiment of this application. In this embodiment, a difference from the second embodiment is that a size of a cross section of a second permanent magnet 214 gradually decreases from an end close to a first body portion 2121 to an end away from the first body portion 2121. The cross section of the second permanent magnet 214 is a cross section obtained by cutting the second permanent magnet 214 in an axial direction O of a rotor inner support portion 120 by using an arc of a same radian as the second permanent magnet 214.

In this embodiment, the size of the cross section of the second permanent magnet 214 gradually decreases from the end close to the first body portion 2121 to the end away from the first body portion 2121, so that a size of an end close to the air gap Q is less than a size of an end away from the air gap Q, and a magnetic line L is more converged toward the air gap Q. In this way, an air gap magnetic density waveform is closer to a sine wave, thereby increasing an air gap magnetic density.

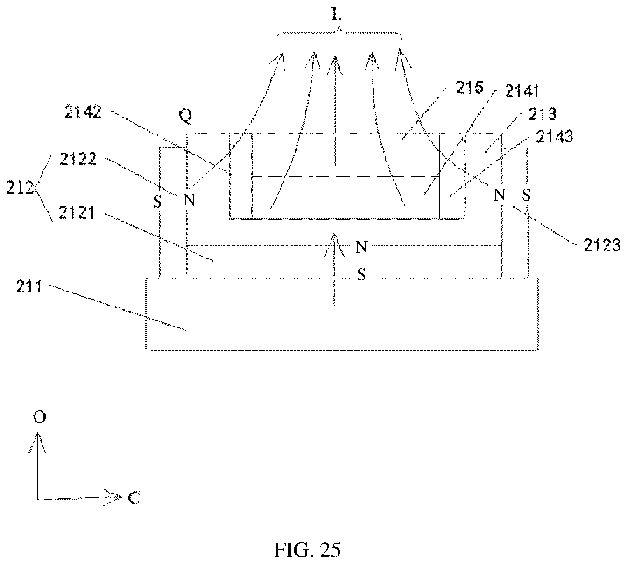

Refer to FIG. 25. FIG. 25 is a diagram of a structure of a magnetic pole unit 210 in the axial motor rotor 10 according to a fourth embodiment of this application. In this embodiment, a difference from the first embodiment is that a second permanent magnet 214 includes a second body portion 2141, a third portion 2142, and a fourth portion 2143. A third soft magnet 215 is located on a side that is of the second body portion 2141 and that is away from a second soft magnet 213. The third portion 2142 and the fourth portion 2143 are arranged on two sides of the second body portion 2141 and the third soft magnet 215 in a circumferential direction C of a rotor inner support portion 120. In this embodiment, the third portion 2142 and the fourth portion 2143 of the second permanent magnet 214 protrude toward the air gap Q relative to the second body portion 2141, thereby improving effect of converging magnetic lines L. In this way, an air gap magnetic density waveform is closer to a sine wave, and an air gap magnetic density is increased.

In a possible implementation, at least one of the following: the first soft magnet 211, the second soft magnet 213, and the third soft magnet 215 is a magnet made of a soft magnetic composite material. In this embodiment, the first soft magnet 211, the second soft magnet 213, and the third soft magnet 215 are all magnets made of soft magnetic composite materials.

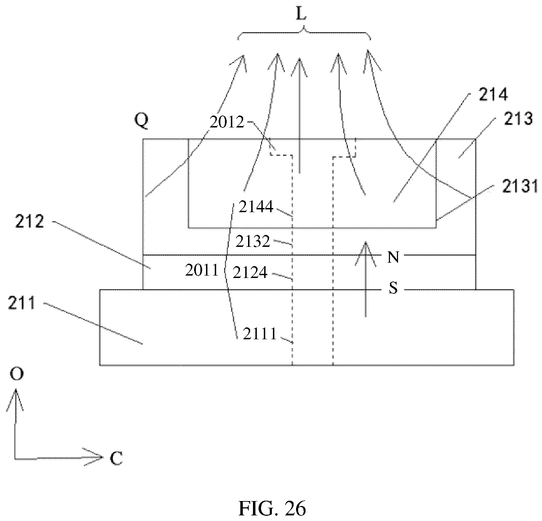

Refer to FIG. 26. FIG. 26 is a diagram of a structure of a magnetic pole unit 210 in the axial motor rotor 10 according to a fifth embodiment of this application. In this embodiment, a difference from the first embodiment is that, there is no third soft magnet 215, and a cross section of a first permanent magnet 212 and a cross section of a second permanent magnet 214 are of a "line" shape. Specifically, the magnetic pole unit 210 includes a first soft magnet 211, the first permanent magnet 212, a second soft magnet 213, and the second permanent magnet 214. The first soft magnet 211, the first permanent magnet 212, and the second soft magnet 213 are stacked in an axial direction O of a rotor inner support portion 120. A second soft magnetic groove 2131 is provided on a surface that is of the second soft magnet 213 and that faces away from the first permanent magnet 212. The second permanent magnet 214 is located in the second soft magnetic groove 2131. A projection of the second permanent magnet 214 on the first permanent magnet 212 in the axial direction O of the rotor inner support portion 120 is located in the first permanent magnet 212. In this embodiment, the second permanent magnet 214 is located in the second soft magnetic groove 2131 of the second soft magnet 213, and two sides that are of the second permanent magnet 214 and that are in a circumferential direction C are covered by the second soft magnet 213, so that magnetic lines flowing from the two sides that are of the second permanent magnet 214 and that are in the circumferential direction C can be converged by the second soft magnet 213, thereby increasing an air gap magnetic density.

In a possible implementation, the projection of the second permanent magnet 214 on the first permanent magnet 212 in the axial direction O is located in the first permanent magnet 212. In an implementation, a radian of the second permanent magnet 214 is less than a radian of the first permanent magnet 212. When the axial motor rotor 10 in this embodiment is mounted on the axial motor 1, the second permanent magnet 214 is disposed close to the stator 12 relative to the first permanent magnet 212, or the second permanent magnet 214 is disposed close to the air gap Q relative to the first permanent magnet 212. A range of magnetic lines L generated by the second permanent magnet 214 is smaller than a range of magnetic lines L generated by the first permanent magnet 212, so that the magnetic lines L of the second permanent magnet 214 are more converged. The magnetic lines L of the second permanent magnet 214 that are more converged attract the magnetic lines L generated by the first permanent magnet 212 to be converged, so that magnetic lines L of the first permanent magnet 212 and the second permanent magnet 214 are more converged. In this way, more magnetic lines L enter the air gap, thereby increasing the air gap magnetic density, making an air gap magnetic density waveform closer to a sine wave, increasing output torque, and improving performance of the axial motor 1.

In another embodiment, the permanent magnet and the soft magnet in the magnetic pole unit 210 may be in other shapes and may have another stacking relationship, and the shapes and the stacking relationship may be set according to a requirement.

It should be noted that, in the second embodiment, the third embodiment, the fourth embodiment, and the fifth embodiment, a magnetic pole positioning protruding portion or a magnetic pole positioning groove may be provided on a side that is of the magnetic pole unit 210 and that faces a rotor backplane 110, and the magnetic pole positioning protruding portion or the magnetic pole positioning groove cooperates with a backplane positioning groove or a backplane positioning protruding portion on the rotor backplane 110, to implement pre-positioning. This is not described herein again.

The axial motor rotor, the axial motor, the powertrain, and the electric device provided in embodiments of this application are described in detail above. The principles and embodiments in this application are described in this specification by using specific examples. The descriptions about embodiments are merely provided, to help understand the method in this application and core ideas of the method. In addition, a person of ordinary skill in the art can make variations and modifications in terms of the specific embodiments and application scopes according to the ideas of this application. In conclusion, the content of this specification shall not be construed as a limitation to this application.

## Claims

1. An axial motor rotor, comprising:
a rotor backplane, configured to be sleeved on a motor shaft of an axial motor, wherein a backplane fastening hole is provided on the rotor backplane;
a plurality of magnetic pole units, wherein the plurality of magnetic pole units are located on a side that is of the rotor backplane and that is in an axial direction of the rotor backplane, and are sequentially arranged in a circumferential direction of the rotor backplane, and a magnetic pole fastening hole is provided on at least a part of the plurality of magnetic pole units; and
a fastening member, wherein the fastening member penetrates through the magnetic pole fastening hole and the backplane fastening hole, to fasten the rotor backplane, the magnetic pole unit, and the fastening member.

2. The axial motor rotor according to claim 1, wherein the magnetic pole fastening hole penetrates through two opposite surfaces that are of the magnetic pole unit and that are in the axial direction of the rotor backplane, the fastening member comprises a fastening member body and a fastening cap that are connected to each other, the fastening cap is disposed at an end that is of the fastening member and that is away from the rotor backplane, and a radial size of the fastening cap is greater than a radial size of the fastening member body; and the magnetic pole fastening hole comprises a magnetic pole fastening hole body and a magnetic pole fastening groove located at an end that is of the magnetic pole fastening hole body and that is away from the rotor backplane, the magnetic pole fastening groove communicates with the magnetic pole fastening hole body, a radial size of the magnetic pole fastening groove is greater than a radial size of the magnetic pole fastening hole body, the fastening member body penetrates through the magnetic pole fastening hole body and the backplane fastening hole, and the fastening cap is located in the magnetic pole fastening groove and is in contact with a groove bottom of the magnetic pole fastening groove.

3. The axial motor rotor according to claim 1, wherein the magnetic pole fastening hole penetrates through two opposite surfaces that are of the magnetic pole unit and that are in the axial direction of the rotor backplane, and the fastening member comprises a fastening member body and a fastening nut; and the magnetic pole fastening hole comprises a magnetic pole fastening hole body and a magnetic pole fastening groove located at an end that is of the magnetic pole fastening hole body and that is away from the rotor backplane, the magnetic pole fastening groove communicates with the magnetic pole fastening hole body, a radial size of the magnetic pole fastening groove is greater than a radial size of the magnetic pole fastening hole body, the fastening member body penetrates through the magnetic pole fastening hole and the backplane fastening hole, an end that is of the fastening member body and that is away from the rotor backplane extends into the magnetic pole fastening groove, the fastening nut is located in the magnetic pole fastening groove, and the fastening nut is sleeved at the end that is of the fastening member body and that is away from the rotor backplane, and is connected, through threads, to the end that is of the fastening member body and that is away from the rotor backplane.

4. The axial motor rotor according to claim 1, wherein the backplane fastening hole penetrates through two opposite surfaces that are of the rotor backplane and that are in the axial direction of the rotor backplane, and an end that is of the fastening member and that is adjacent to the rotor backplane is located in the backplane fastening hole or extends through the backplane fastening hole to outside of the backplane fastening hole.

5. The axial motor rotor according to any one of claims 1 to 4, wherein a magnetic pole positioning protruding portion is disposed on a surface that is of the magnetic pole unit and that faces the rotor backplane, a backplane positioning groove is provided on a surface that is of the rotor backplane and that faces the magnetic pole unit, and the magnetic pole positioning protruding portion is located in the backplane positioning groove.

6. The axial motor rotor according to claim 5, wherein the magnetic pole positioning protruding portion is disposed around a circumferential side of the magnetic pole fastening hole, a magnetic pole positioning through hole is provided in the magnetic pole positioning protruding portion, the magnetic pole positioning through hole communicates with the magnetic pole fastening hole, the backplane positioning groove is provided around a circumferential side of the backplane fastening hole, and the fastening member sequentially passes through the magnetic pole fastening hole, the magnetic pole positioning through hole, and the backplane fastening hole.

7. The axial motor rotor according to any one of claims 1 to 4, wherein a magnetic pole positioning groove is provided on a surface that is of the magnetic pole unit and that faces the rotor backplane, a backplane positioning protruding portion is disposed on a surface that is of the rotor backplane and that faces the magnetic pole unit, and the backplane positioning protruding portion is located in the magnetic pole positioning groove.

8. The axial motor rotor according to any one of claims 1 to 7, wherein the magnetic pole unit comprises a first soft magnet and a first permanent magnet, at least a part of the first soft magnet and at least a part of the first permanent magnet are stacked in the axial direction of the rotor backplane, and the magnetic pole fastening hole penetrates through the first soft magnet and the first permanent magnet.

9. The axial motor rotor according to claim 8, wherein a projection of the first permanent magnet on the first soft magnet in the axial direction of the rotor backplane is located in the first soft magnet.

10. The axial motor rotor according to any one of claims 1 to 9, wherein the axial motor rotor further comprises a rotor inner support portion and a rotor outer support portion that are coaxially disposed, the rotor inner support portion is located on an inner circumferential side of the rotor backplane and protrudes toward a side of the rotor backplane relative to the rotor backplane, the rotor outer support portion is located on an outer circumferential side of the rotor backplane and protrudes toward the side relative to the rotor backplane, and two ends that are of each magnetic pole unit and that are in a radial direction of the rotor backplane are respectively connected to the rotor inner support portion and the rotor outer support portion.

11. The axial motor rotor according to claim 10, wherein the axial motor rotor further comprises a reinforcing ring, and the reinforcing ring is sleeved on an outer side of the rotor outer support portion.

12. The axial motor rotor according to claim 10, wherein there is an inter-magnetic gap between two adjacent magnetic pole units, the axial motor rotor further comprises a filling magnet, the filling magnet is filled in the inter-magnetic gap, and two ends that are of the filling magnet and that are in the radial direction of the rotor backplane are respectively disposed at intervals with the rotor inner support portion and the rotor outer support portion.

13. An axial motor, wherein the axial motor comprises a motor shaft, a stator, and the axial motor rotor according to any one of claims 1 to 12, the stator is mounted on the motor shaft and is rotatably connected to the motor shaft, the axial motor rotor is mounted on the motor shaft and is fastened to the motor shaft, and the magnetic pole unit is located on a side that is of the rotor backplane and that faces the stator.

14. A powertrain, comprising a gearbox and the axial motor according to claim 13, wherein the axial motor is in transmission connection to a power input shaft of the gearbox, and is configured to output power to the power input shaft.

15. An electric device, wherein the electric device comprises a device body and the axial motor according to claim 13, and the axial motor is mounted on the device body; or
the electric device comprises a device body and the powertrain according to claim 14, and the powertrain is mounted on the device body.
